# EUROPEAN PATENT APPLICATION

(11) **EP 4 800 816 A1**
(43) Date of publication of application: **02.09.2026**
(21) Application number: 24887365.5
(22) Date of filing: 30.05.2024
(51) Int. Cl.: H01M 50/15, H01M 50/209, H01M 50/509, H01M 50/531, H01M 50/249, H01M 10/058, H01M 50/258

(54) **BATTERY CELL, BATTERY, AND ELECTRICAL APPARATUS**

(30) Priority: 09.11.2023 CN 202311490329
(71) Applicant: Contemporary Amperex Technology Co., Limited, Ningde, Fujian 352100 (CN)
(72) Inventor: BAI, Hualei, Ningde, Fujian 352100 (CN); ZHENG, Yulian, Ningde, Fujian 352100 (CN); LIU, Jiang, Ningde, Fujian 352100 (CN); HUANG, Shoujun, Ningde, Fujian 352100 (CN); WANG, Peng, Ningde, Fujian 352100 (CN); PENG, Xinying, Ningde, Fujian 352100 (CN)
(74) Representative: Kraus & Lederer PartGmbB
(86) International application number: PCT/CN2024/096342
(87) International publication number: WO 2025/097741

(57) **Abstract**

A battery cell (20), a battery (100), and an electrical apparatus. The battery cell (20) comprises a housing (21), a first electrode assembly (22), and a second electrode assembly (23). The first electrode assembly (22) and the second electrode assembly (23) are both accommodated within the housing (21), the first electrode assembly (22) and the second electrode assembly (23) are arranged along a first direction and are electrically connected, and the first electrode assembly (22) and the second electrode assembly (23) are both winding structures formed by winding around an axis extending along the first direction. The battery cell (20) having the described structure increases the length size of the battery cell (20) on the first direction, and also optimizes the size, on the first direction, of a single electrode assembly accommodated within the housing (21), without enlarging the winding size of the first electrode assembly (22) or the second electrode assembly (23) on the first direction, so that the winding difficulty of the first electrode assembly (22) and the second electrode assembly (23) can be effectively reduced, and the assembling difficulty of the battery cell (20) can be reduced, thereby helping to reduce the manufacturing costs of the battery cell (20) and improve the production efficiency of the battery cell (20).

## Description

### CROSS-REFERENCE TO RELATED APPLICATION

The present application claims priority to Chinese Patent Application No. 2023114903296 filed on November 09, 2023 and entitled "BATTERY CELL, BATTERY, AND ELECTRIC DEVICE", the content of which is incorporated herein by reference in its entirety.

### TECHNICAL FIELD

The present application relates to the technical field of batteries, and in particular, to a battery cell, a battery, and an electric device.

### BACKGROUND

In recent years, new energy vehicles have developed by leaps and bounds. In the field of electric vehicles, power batteries, as the power source of electric vehicles, play an irreplaceable and important role. With the vigorous promotion of new energy vehicles, the demand for power battery products is also growing day by day, and the battery, as a core component of the new energy vehicle, has relatively high requirements on service performance. The battery cell of the battery usually includes a housing and an electrode assembly accommodated in the housing. In order to improve the energy density and capacitance of the battery cell, the size of the battery cell is also becoming increasingly large. However, the existing large-sized battery cell is relatively difficult to manufacture, and the assembly of the existing large-sized battery cell is relatively complicated, which are not conducive to improving the production efficiency of the battery cell.

### SUMMARY

Embodiments of the present application provide a battery cell, a battery, and an electric device, which are capable of effectively improving the production efficiency of the battery cell.

In a first aspect, the embodiments of the present application provide a battery cell. The battery cell includes a housing, a first electrode assembly, and a second electrode assembly. Both the first electrode assembly and the second electrode assembly are accommodated in the housing; the first electrode assembly and the second electrode assembly are arranged along a first direction and are electrically connected, and both the first electrode assembly and the second electrode assembly are wound structures formed by winding around an axis extending in the first direction.

In the above technical solution, the housing of the battery cell accommodates the first electrode assembly and the second electrode assembly that are arranged along the first direction and are electrically connected to each other, and both the first electrode assembly and the second electrode assembly are wound-type structures formed by winding around the axis extending in the first direction, such that the first electrode assembly and the second electrode assembly are structures arranged in the housing along axial directions of the first electrode assembly and the second electrode assembly. The battery cell adopting such a structure is capable of optimizing the dimension in the first direction of a single electrode assembly accommodated in the housing while realizing the increase in the length dimension of the battery cell in the first direction, without the need to enlarge the winding dimension of the first electrode assembly or the second electrode assembly in the first direction, thereby effectively reducing the winding difficulty of the first electrode assembly and the second electrode assembly and reducing the assembly difficulty of the battery cell. This, in turn, is conducive to reducing the manufacturing cost of the battery cell and improving the production efficiency of the battery cell.

In some embodiments, the first electrode assembly includes a first main body and a first tab, the second electrode assembly includes a second main body and a second tab, and the second main body and the first main body are arranged along the first direction; in the first direction, the first tab is disposed at an end, facing the second main body, of the first main body, the second tab is disposed at an end, facing the first main body, of the second main body, and the second tab is connected to the first tab to electrically connect the first electrode assembly and the second electrode assembly.

In the above technical solution, the first main body of the first electrode assembly and the second main body of the second electrode assembly are arranged along the first direction, the first tab of the first electrode assembly is disposed at the end, facing the second main body, of the first main body, and correspondingly, the second tab of the second electrode assembly is disposed at the end, facing the first main body, of the second main body, such that connecting the first tab and the second tab can achieve an electrical connection between the first electrode assembly and the second electrode assembly. The battery cell adopting such a structure facilitates the connection between the first electrode assembly and the second electrode assembly, and is conducive to reducing the difficulty of the electrical connection between the first electrode assembly and the second electrode assembly, thereby improving the assembly efficiency of the battery cell.

In some embodiments, the battery cell further includes a mounting frame; the mounting frame is disposed between the first main body and the second main body in the first direction; the mounting frame is configured to separate the first main body and the second main body.

In the above technical solution, the mounting frame is disposed between the first main body and the second main body that are arranged along the first direction, such that the mounting frame can separate the first main body and the second main body. On the one hand, the mounting frame can serve to stably assemble the first main body and the second main body, which is conducive to reducing the stability of the first electrode assembly and the second electrode assembly assembled into the housing. On the other hand, the collisions or contact between the first main body and the second main body during use can be reduced.

In some embodiments, the mounting frame is provided with a clearance hole, the clearance hole extends through the mounting frame in the first direction, and both the first tab and the second tab are inserted into the clearance hole.

In the above technical solution, the mounting frame is provided with the clearance hole that extends through two sides of the mounting frame in the first direction, and both the first tab and the second tab are inserted into the clearance hole, such that the battery cell adopting such a structure can, on the one hand, reduce the connection difficulty of the first tab and the second tab, which is conducive to reducing the blocking of the first tab and the second tab by the mounting frame, and on the other hand, the mounting frame can also play a certain stabilizing and protecting role for the first tab and the second tab, which is conducive to reducing the wobbling or damage of the first tab and the second tab during use, thereby improving the use stability and service life of the battery cell.

In some embodiments, the mounting frame includes a first frame body and a second frame body detachably connected to each other; the first frame body and the second frame body are arranged along a second direction, and the first frame body and the second frame body jointly define, in an enclosing manner, the clearance hole, the second direction being perpendicular to the first direction.

In the above technical solution, the mounting frame is provided with the first frame body and the second frame body that are arranged along the second direction. The first frame body and the second frame body are configured as a detachably connected structure, and the first frame body and the second frame body jointly define, in an enclosing manner, the clearance hole configured to allow the first tab and the second tab to be inserted thereinto, such that the mounting frame adopting such a structure, on the one hand, facilitates the assembly of the first tab and the second tab into the clearance hole after the first tab and the second tab are connected to each other, which is conducive to reducing the difficulty of assembling the first tab and the second tab into the clearance hole, and on the other hand, facilitates the assembly of the mounting frame between the first main body and the second main body, and facilitates the maintenance of the first tab and the second tab after quickly disassembling and assembling the first frame body and the second frame body at a later stage.

In some embodiments, a first groove is provided on a side, facing the second frame body, of the first frame body, and the first groove extends through the first frame body in the first direction; a second groove is provided on a side, facing the first frame body, of the second frame body, and the second groove extends through the second frame body in the first direction; the second groove and the first groove define, in an enclosing manner, the clearance hole.

In the above technical solution, the first groove is provided on the side, facing the second frame body, of the first frame body, and the second groove is provided on the side, facing the first frame body, of the second frame body, such that after the first frame body and the second frame body are assembled with each other in the second direction, the first groove and the second groove can jointly define, in an enclosing manner, the clearance hole configured to accommodate the first tab and the second tab, thereby achieving a structure that is simple and easy to implement.

In some embodiments, a snap-fit part is provided on a side, facing the second frame body, of the first frame body, and a snap-fit hole is provided on a side, facing the first frame body, of the second frame body; the snap-fit hole is configured to allow the snap-fit part to be snap-fitted thereinto.

In the above technical solution, the snap-fit part is provided on the side, facing the second frame body, of the first frame body, and correspondingly, the snap-fit hole configured to allow the snap-fit part to be snap-fitted thereinto is provided on the side, facing the first frame body, of the second frame body, such that the detachable connection between the first frame body and the second frame body is achieved through the snap fit between the snap-fit part and the snap-fit hole. The structure is simple and easy to assemble.

In some embodiments, the first tab includes a first root part and a first tab part; the first root part connects the first main body and the first tab part, the first tab part is inserted into the clearance hole, and the first tab part is connected to the second tab; in the first direction, a first accommodating groove is provided on a side, facing the first main body, of the mounting frame; the first accommodating groove is configured to accommodate the first root part, and the clearance hole extends through a groove bottom surface of the first accommodating groove.

In the above technical solution, the first accommodating groove configured to accommodate the first root part of the first tab is provided on the side, facing the first main body, of the mounting frame, and the clearance hole is a structure that extends through the groove bottom surface of the first accommodating groove, such that on the one hand, the mounting frame can provide a clearance for the first root part of the first tab to reduce the occurrence of the mounting frame pressing against and damaging the first tab, and on the other hand, the insertion of the first tab part of the first tab into the clearance hole to assemble and connect with the second tab is facilitated.

In some embodiments, in the first direction, the first root part is provided with a first surface facing away from the first main body, the first tab part protrudes from the first surface, and the first surface fits with the groove bottom surface of the first accommodating groove.

In the above technical solution, the first surface, facing the groove bottom surface of the first accommodating groove, of the first root part is configured as a structure that fits with the groove bottom surface of the first accommodating groove, enabling the groove bottom surface of the first accommodating groove to fit closely to the first surface of the first root part, such that the groove bottom surface of the first accommodating groove can also play a certain shaping and gathering role for the first root part of the first tab, thereby helping to maintain the shape of the first root part of the first tab.

In some embodiments, the second tab includes a second root part and a second tab part; the second root part connects the second main body and the second tab part, the second tab part is inserted into the clearance hole, and the second tab part is connected to the first tab; in the first direction, a second accommodating groove is provided on a side, facing the second main body, of the mounting frame; the second accommodating groove is configured to accommodate the second root part, and the clearance hole extends through a groove bottom surface of the second accommodating groove.

In the above technical solution, the second accommodating groove configured to accommodate the second root part of the second tab is provided on the side, facing the second main body, of the mounting frame, and the clearance hole is a structure that extends through the groove bottom surface of the second accommodating groove, such that on the one hand, the mounting frame can provide a clearance for the second root part of the second tab to reduce the occurrence of the mounting frame pressing against and damaging the second tab, and on the other hand, the insertion of the second tab part of the second tab into the clearance hole to assemble and connect with the first tab is facilitated.

In some embodiments, in the first direction, the second root part is provided with a second surface facing away from the second main body, the second tab part protrudes from the second surface, and the second surface fits with the groove bottom surface of the second accommodating groove.

In the above technical solution, the second surface, facing the groove bottom surface of the second accommodating groove, of the second root part is configured as a structure that fits with the groove bottom surface of the second accommodating groove, enabling the groove bottom surface of the second accommodating groove to fit closely to the second surface of the second root part, such that the groove bottom surface of the second accommodating groove can also play a certain shaping and gathering role for the second root part of the second tab, thereby helping to maintain the shape of the second root part of the second tab.

In some embodiments, the mounting frame is provided with a through hole, the through hole extends through the mounting frame in the first direction, and the through hole is configured to allow an electrolytic solution to pass through.

In the above technical solution, the mounting frame is provided with the through hole that extends through the two sides of the mounting frame in the first direction, such that the electrolytic solution is allowed to flow between the first electrode assembly and the second electrode assembly through the through hole. This, on the one hand, is conducive to improving the fluidity of the electrolytic solution between the first electrode assembly and the second electrode assembly to improve the wetting performance of the first electrode assembly and the second electrode assembly, and on the other hand, facilitates the flow of a gas, generated between the first electrode assembly and the second electrode assembly, from the through hole.

In some embodiments, a plurality of the through holes are provided on the mounting frame.

In the above technical solution, providing the plurality of through holes on the mounting frame is conducive to further improving the fluidity of the electrolytic solution between the first electrode assembly and the second electrode assembly to further improve the wetting performance of the first electrode assembly and the second electrode assembly, and can further improve the flow effect of the gas generated between the first electrode assembly and the second electrode assembly.

In some embodiments, a cavity is formed inside the mounting frame, and the cavity is in communication with the through hole.

In the above technical solution, the cavity is provided inside the mounting frame, and the cavity is in communication with the through hole; that is, the through hole is of a structure extending through the inner wall surface of the cavity, such that the mounting frame adopting such a structure, on the one hand, can reduce the weight of the mounting frame by providing the cavity to reduce the overall weight of the battery cell, thereby helping to improve the energy density of the battery cell, and on the other hand, enables the cavity to also play a certain buffering role for the electrolytic solution, thereby helping to further improve the wetting performance of the first electrode assembly and the second electrode assembly.

In some embodiments, the battery cell further includes a connecting member; the connecting member connects the mounting frame, the first main body, and the second main body.

In the above technical solution, the battery cell is further provided with the connecting member connecting the mounting frame, the first main body, and the second main body, such that the mounting frame, the first main body, and the second main body can be connected into a whole via the connecting member. This is conducive to improving the structural stability of the mounting frame disposed between the first main body and the second main body, thereby reducing the risks such as wobbling or detachment of the mounting frame between the first main body and the second main body.

In some embodiments, the connecting member is adhesively bonded to the mounting frame, the first main body, and the second main body.

In the above technical solution, the connecting member is configured as a structure adhesively bonded to the mounting frame, the first main body, and the second main body to connect the mounting frame, the first main body, and the second main body into a whole, such that the battery cell adopting such a structure is conducive to reducing the assembly difficulty of the connecting member connecting the mounting frame, the first main body, and the second main body, thereby improving the assembly efficiency of the battery cell.

In some embodiments, the connecting member surrounds outer sides of the mounting frame, the first main body, and the second main body around the axis extending in the first direction.

In the above technical solution, the connecting member is configured as an annular structure surrounding the mounting frame, the first main body, and the second main body, such that the connecting member wraps around the outer sides of the mounting frame, the first main body, and the second main body. This is conducive to further improving the structural stability of the connecting member connecting the mounting frame, the first main body, and the second main body, thereby further improving the structural stability of the mounting frame disposed between the first main body and the second main body, so as to reduce the risks such as wobbling or detachment of the mounting frame between the first main body and the second main body.

In some embodiments, the first electrode assembly includes two first tabs, and the two first tabs have opposite polarities and are both disposed at the end, facing the second main body, of the first main body; the second electrode assembly includes two second tabs, and the two second tabs have opposite polarities and are both disposed at the end, facing the first main body, of the second main body; the first tab and the second tab having a same polarity are connected.

In the above technical solution, the two first tabs of the first electrode assembly having opposite polarities are both disposed at the end, facing the second main body, of the first main body, and the two second tabs of the second electrode assembly having opposite polarities are both disposed at the end, facing the first main body, of the second main body. The first tab and the corresponding second tab having the same polarity are connected to each other to achieve a parallel connection between the first electrode assembly and the second electrode assembly, thereby achieving an electrical connection between the first electrode assembly and the second electrode assembly. The structure is simple and easy to assemble.

In some embodiments, the housing is provided with a wall part, and in the first direction, the first electrode assembly is located between the wall part and the second electrode assembly; the battery cell further includes two electrode terminals; the two electrode terminals are both mounted to the wall part in an insulated manner, and the electrode terminals are configured to output or input electrical energy of the battery cell; the first electrode assembly further includes two third tabs, the two third tabs have opposite polarities and are both disposed at an end, facing the wall part, of the first main body in the first direction, and the two third tabs are connected to the two electrode terminals, respectively.

In the above technical solution, the two third tabs are provided on the end, facing the wall part, of the first main body of the first electrode assembly in the first direction, and the two third tabs are correspondingly connected to the two electrode terminals disposed on the wall part to realize the input or output of the electrical energy of the battery cell, such that the battery cell adopting such a structure only needs to connect the third tabs to the electrode terminals to realize the input or output of the electrical energy of the battery cell after the first electrode assembly and the second electrode assembly are electrically connected to each other, without the need to provide a plurality of electrode output ends, thereby realizing the increase in the length dimension of the battery cell in the first direction while only requiring two electrode terminals to realize the input or output of the electrical energy of the battery cell. This, in turn, can effectively reduce the assembly difficulty of the battery cell, help to reduce the manufacturing cost of the battery cell, and help to improve the production efficiency of the battery cell.

In some embodiments, the housing includes a housing body and an end cover; an accommodating cavity having an opening is formed inside the housing body, and the accommodating cavity is configured to accommodate the first electrode assembly and the second electrode assembly; the end cover closes the opening; the end cover is the wall part.

In the above technical solution, the wall part of the housing is configured as the end cover of the housing for closing the opening of the housing body, such that the battery cell adopting such a structure facilitates the assembly of the electrode terminal on the end cover, and facilitates the assembly and connection of the electrode terminal with the third tab of the first electrode assembly, thereby helping to reduce the assembly difficulty of the battery cell, and thus improving the production efficiency of the battery cell.

In some embodiments, the housing includes a housing body and an end cover, and the housing body includes a side wall and the wall part that are integrally formed; the side wall is disposed around a periphery of the wall part; in the first direction, one end of the side wall is connected to the wall part, and the other end of the side wall defines, in an enclosing manner, an opening; the side wall and the wall part jointly define an accommodating cavity configured to accommodate the first electrode assembly and the second electrode assembly; the end cover closes the opening.

In the above technical solution, the wall part of the housing is configured as a wall of the housing body, disposed opposite to the end cover in the first direction, such that the battery cell adopting such a structure can enable a region of the housing, where the electrode terminal is mounted, to be located away from the end cover, and ensure that no direct connection relationship exists between the wall part and the end cover, thereby mitigating the effect of a force, generated when components such as the electrode terminal pull or twist the wall part, acting on the end cover, so as to reduce the risk of connection failure between the end cover and the housing body. This, in turn, is conducive to reducing the risk of liquid leakage of the battery cell during use.

In some embodiments, the battery cell further includes an insulating member; the insulating member wraps around outer sides of the first electrode assembly and the second electrode assembly around the axis extending in the first direction; the insulating member is configured to insulate and isolate the first electrode assembly from the housing, as well as the second electrode assembly from the housing.

In the above technical solution, the battery cell is further provided with the insulating member, and the insulating member wraps around the outer sides of the first electrode assembly and the second electrode assembly. On the one hand, enabling the insulating member to separate the first electrode assembly from the housing as well as the second electrode assembly from the housing is conducive to reducing the risk of short circuit between the first electrode assembly and the housing as well as between the second electrode assembly and the housing, thereby improving the use reliability of the battery cell. On the other hand, the insulating member can further provide a fastening effect for the first electrode assembly and the second electrode assembly to connect the first electrode assembly and the second electrode assembly arranged along the first direction into a whole, thereby helping to improve the overall structural stability of the first electrode assembly and the second electrode assembly.

In some embodiments, a length direction of the housing is consistent with the first direction, and a length of the housing is L, satisfying L ≥ 200 mm.

In the above technical solution, the length of the housing is configured to be greater than or equal to 200 mm to increase the length dimension of the battery cell in the first direction, and the first electrode assembly and the second electrode assembly in the housing are configured into a structure arranged along the first direction while a relatively large length dimension of the battery cell is realized, such that the dimension in the first direction of a single electrode assembly accommodated in the housing can be optimized while realizing that the length of the housing of the battery cell in the first direction is greater than or equal to 200 mm, without the need to enlarge the winding dimension of the first electrode assembly or the second electrode assembly in the first direction, thereby reducing the winding difficulty of the first electrode assembly and the second electrode assembly and reducing the assembly difficulty of the battery cell. This, in turn, is conducive to reducing the manufacturing cost of the battery cell and improving the production efficiency of the battery cell.

In some embodiments, a length direction of the housing is consistent with the first direction, and a length of the housing is L, satisfying L ≥ 250 mm.

In the above technical solution, the length of the housing is further configured to be greater than or equal to 250 mm to further increase the length dimension of the battery cell in the first direction, such that the dimension in the first direction of a single electrode assembly accommodated in the housing can be optimized while realizing that the length of the housing of the battery cell in the first direction is greater than or equal to 250 mm, without the need to enlarge the winding dimension of the first electrode assembly or the second electrode assembly in the first direction, thereby reducing the winding difficulty of the first electrode assembly and the second electrode assembly and reducing the assembly difficulty of the battery cell. This, in turn, is conducive to reducing the manufacturing cost of the battery cell and improving the production efficiency of the battery cell.

In a second aspect, the embodiments of the present application further provide a battery. The battery includes the above battery cell.

In a third aspect, the embodiments of the present application further provide an electric device. The electric device includes the above battery cell, and the battery cell is configured to provide electrical energy.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic structural diagram of a vehicle according to some embodiments of the present application;
FIG. 2 is an exploded view of a structure of a battery according to some embodiments of the present application;
FIG. 3 is a schematic structural diagram of a battery cell according to some embodiments of the present application;
FIG. 4 is an exploded view of a structure of a battery cell according to some embodiments of the present application;
FIG. 5 is a schematic structural diagram of a first electrode assembly of a battery cell according to some embodiments of the present application;
FIG. 6 is a schematic structural diagram of a second electrode assembly of a battery cell according to some embodiments of the present application;
FIG. 7 is a schematic diagram of a connection between a first electrode assembly and a second electrode assembly of a battery cell according to some embodiments of the present application;
FIG. 8 is a schematic structural diagram of a mounting frame of a battery cell according to some embodiments of the present application;
FIG. 9 is a top view of a mounting frame of a battery cell according to some embodiments of the present application;
FIG. 10 is a cross-sectional view of a mounting frame of a battery cell according to some embodiments of the present application;
FIG. 11 is an exploded view of a structure of a mounting frame of a battery cell according to some embodiments of the present application;
FIG. 12 is a schematic structural diagram of a second frame body of a mounting frame of a battery cell according to some embodiments of the present application;
FIG. 13 is a cross-sectional view of a first electrode assembly of a battery cell according to some embodiments of the present application;
FIG. 14 is a schematic cross-sectional view of a second electrode assembly of a battery cell according to some embodiments of the present application.;
FIG. 15 is a schematic diagram of an assembly of a first electrode assembly and a second electrode assembly with a connecting member according to some embodiments of the present application; and
FIG. 16 is a schematic diagram of an assembly of a first electrode assembly and a second electrode assembly with an insulating member according to some embodiments of the present application.

Reference numerals: 1000-vehicle; 100-battery; 10-case; 11-first case body; 12-second case body; 20-battery cell; 21-housing; 211-housing body; 2111-opening; 212-end cover; 213-wall part; 22-first electrode assembly; 221-first main body; 222-first tab; 2221-first root part; 2221a-first surface; 2222-first tab part; 223-third tab; 23-second electrode assembly; 231-second main body; 232-second tab; 2321-second root part; 2321a-second surface; 2322-second tab part; 24-electrode terminal; 25-pressure relief mechanism; 26-mounting frame; 261-clearance hole; 262-first frame body; 2621-first groove; 2622-snap-fit part; 263-second frame body; 2631-second groove; 2632-snap-fit hole; 264-first accommodating groove; 265-second accommodating groove; 266-through hole; 267-cavity; 27-connecting member; 28-insulating member; 200-controller; 300-motor; X-first direction; Y-second direction; Z-third direction.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the above terms in the present application can be understood according to specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device, are only exemplary and should not be construed as limiting the present application in any way.

The term "plurality of" used in the present application refers to two or more (including two).

In the embodiments of the present application, the battery cell may be a secondary battery. The secondary battery refers to a battery cell that can be reused by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

The battery cell generally includes an electrode assembly. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector is provided with two surfaces opposite to each other in its own thickness direction, and the positive electrode active material is disposed on either or both of the two opposite surfaces of the positive electrode current collector.

As an example, a metal foil or a composite current collector may be used as the positive electrode current collector. For example, for the metal foil, aluminum treated with silver on the surface, stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in a combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), or LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof.

In some embodiments, a foam metal may be used as the positive electrode. The foam metal may be foam nickel, foam copper, foam aluminum, a foam alloy, or the like. When the foam metal is used as the positive electrode, the surface of the foam metal may not be provided with the positive electrode active material. Certainly, the positive electrode active material may also be provided. As an example, a lithium source material, a potassium metal, or a sodium metal may also be incorporated into and/or deposited in the foam metal; the lithium source material is a lithium metal and/or a lithium-rich material.

In some embodiments, the negative electrode may be a negative electrode plate, and the negative electrode plate may include a negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, nickel, titanium, or the like may be used. The foam metal may be foam nickel, foam copper, foam aluminum, a foam alloy, or the like. The composite current collector may include a polymer material base layer and a metal layer. The composite current collector may be formed by forming a metal material (copper, copper alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the negative electrode plate may include a negative electrode current collector and a negative electrode active material disposed on at least one surface of the negative electrode current collector.

As an example, the negative electrode current collector is provided with two surfaces opposite to each other in its own thickness direction, and the negative electrode active material is disposed on either or both of the two opposite surfaces of the negative electrode current collector.

As an example, the negative electrode active material may be a negative electrode active material known in the art for use in battery cells. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the electrode assembly further includes a separator. The separator is disposed between the positive electrode and the negative electrode.

In some embodiments, the separator is a separation film. The separation film may be of various types, and any porous-structure separation film known to have good chemical stability and mechanical stability may be selected and used.

As an example, the material of the separation film may include at least one of glass fiber, non-woven fabric, polyethylene, polypropylene, and polyvinylidene fluoride. The separation film may be a single-layer film or a multi-layer composite film. When the separation film is a multi-layer composite film, the materials of the layers may be the same or different. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode from the negative electrode.

In some embodiments, the battery cell further includes an electrolyte that serves to conduct ions between the positive electrode and the negative electrode. The electrolyte may be liquid-state, gel-state, or solid-state. The liquid-state electrolyte includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a skeleton network with a polymer as an electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may include one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur or argyrodite), and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

In some embodiments, the electrode assembly is of a wound structure. The positive electrode plate and the negative electrode plate are wound to form a wound structure.

As an example, a plurality of separators may be provided and are separately disposed between any adjacent positive electrode plates or negative electrode plates.

As an example, the separators may be provided continuously and are disposed between any adjacent positive electrode plates or negative electrode plates by means of folding or winding.

In some embodiments, the shape of the electrode assembly may be a cylindrical shape, a flat shape, or the like.

In some embodiments, the electrode assembly is provided with tabs that can conduct current out from the electrode assembly. The tabs include a positive electrode tab and a negative electrode tab.

In some embodiments, the battery cell may include a housing. The housing is configured to enclose components such as the electrode assembly and the electrolyte. The housing may be a steel housing, an aluminum housing, a plastic housing (such as polypropylene), a composite metal housing (such as a copper-aluminum composite housing), an aluminum-plastic film, or the like.

As an example, the battery cell may be a cylindrical battery cell, a prismatic battery cell, a pouch battery cell, or a battery cell of other shapes. The prismatic battery cell includes, but is not limited to, a square-housing battery cell, a blade-shaped battery cell, and a polygonal prismatic battery, and the polygonal prismatic battery is, for example, a hexagonal prismatic battery.

The battery mentioned in the embodiments of the present application refers to a single physical module including one or a plurality of battery cells to provide higher voltage and capacity.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a portion of the chassis structure of the vehicle. For example, a portion of the case may become at least a portion of the floor of the vehicle, or a portion of the case may become at least a portion of a crossbeam and a longitudinal beam of the vehicle.

In some embodiments, the battery may be an energy storage device. The energy storage device includes an energy storage container, an energy storage electrical cabinet, and the like.

Batteries, with outstanding advantages such as high energy density, low environmental pollution, high power density, long service life, wide adaptability, and low self-discharge coefficient, are an important part of new energy development nowadays. Battery technology advancement requires consideration of various design factors at the same time, such as energy density, cycle life, discharge capacity, charging and discharging rate, and other performance parameters.

For a general battery cell, the battery cell usually includes a housing and an electrode assembly accommodated in the housing. As requirements for energy density and capacity of the battery cell become increasingly high, in the related art, in order to improve the energy density and capacity of the battery cell, the length dimension of the battery cell is enlarged to improve the energy density and capacity of the battery cell. However, when the length dimension of the battery cell is enlarged, the length dimension of the electrode assembly correspondingly needs to be enlarged, which causes relatively great manufacturing difficulty of a wound electrode assembly and makes the wound electrode assembly inconvenient to assemble. Especially when the length of the battery cell exceeds 200 mm or 250 mm, the winding difficulty of the wound electrode assembly is extremely great, thereby resulting in relatively great manufacturing difficulty of the battery cell, and making the battery cell inconvenient to assemble. This is not conducive to optimizing the production takt of the battery cell, and further results in low production efficiency and high manufacturing cost of the battery cell.

Based on the above considerations, in order to solve the problem of low production efficiency and high production cost of the battery cell, the embodiments of the present application provide a battery cell. The battery cell includes a housing, a first electrode assembly, and a second electrode assembly. Both the first electrode assembly and the second electrode assembly are accommodated in the housing. The first electrode assembly and the second electrode assembly are arranged along a first direction and are electrically connected. Both the first electrode assembly and the second electrode assembly are wound structures formed by winding around an axis extending in the first direction.

In the battery cell with such a structure, the housing of the battery cell accommodates the first electrode assembly and the second electrode assembly that are arranged along the first direction and are electrically connected to each other, and both the first electrode assembly and the second electrode assembly are wound-type structures formed by winding around the axis extending in the first direction, such that the first electrode assembly and the second electrode assembly are structures arranged in the housing along axial directions of the first electrode assembly and the second electrode assembly. The battery cell adopting such a structure is capable of optimizing the dimension in the first direction of a single electrode assembly accommodated in the housing while realizing the increase in the length dimension of the battery cell in the first direction, without the need to enlarge the winding dimension of the first electrode assembly or the second electrode assembly in the first direction, thereby effectively reducing the winding difficulty of the first electrode assembly and the second electrode assembly and reducing the assembly difficulty of the battery cell. This, in turn, is conducive to reducing the manufacturing cost of the battery cell and improving the production efficiency of the battery cell.

The battery cell disclosed in the embodiments of the present application can be used in, but is not limited to be used in, electric devices such as vehicles, ships, or aircraft. The battery cell, the battery, and the like disclosed in the present application may be used to constitute the power system of the electric device, thereby helping to alleviate the problem of relatively high manufacturing difficulty of the battery cell, so as to improve the production efficiency of the battery cell and reduce the manufacturing cost of the battery cell.

The embodiments of the present application provide an electric device using a battery as the power source. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

For ease of description, the following embodiments are illustrated by taking a vehicle as an example of the electric device according to an embodiment of the present application.

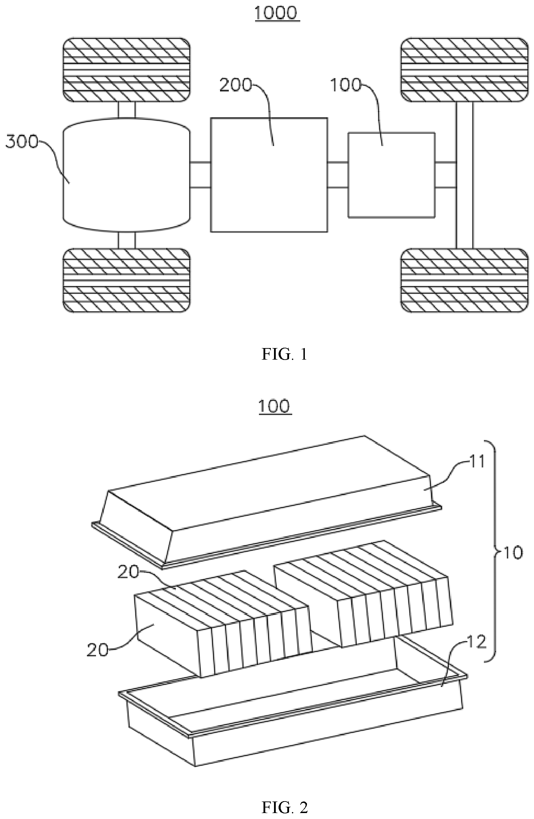

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000. The battery 100 may be disposed at the bottom of the vehicle 1000, or may be disposed at the head of the vehicle 1000, or may be disposed at the tail of the vehicle 1000. The battery 100 may be configured to power the vehicle 1000. For example, the battery 100 may serve as an operation power source or service power source for the vehicle 1000. The vehicle 1000 may further include a controller 200 and a motor 300. The controller 200 is configured to control the battery 100 to supply power to the motor 300, e.g., for the operation power needed by the vehicle 1000 for start-up, navigation, and driving.

In some embodiments of the present application, the battery 100 may not only serve as an operation power source or service power source for the vehicle 1000, but also as a driving power source for the vehicle 1000 to, replacing or partially replacing fuel or natural gas, provide driving power for the vehicle 1000.

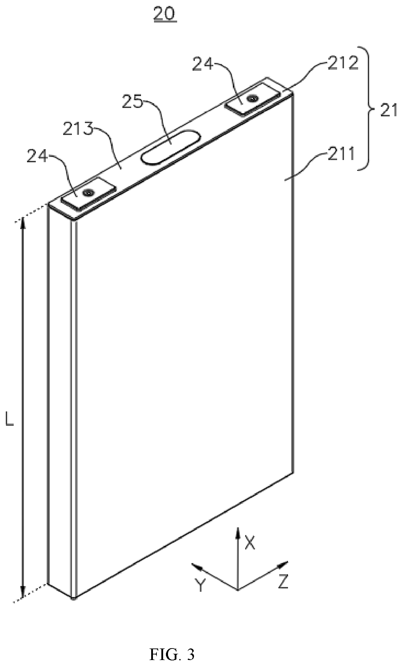

Referring to FIGs. 2 and 3, FIG. 2 is an exploded view of a structure of a battery 100 according to some embodiments of the present application, and FIG. 3 is a schematic structural diagram of a battery cell 20 according to some embodiments of the present application. The battery 100 includes a case 10 and a battery cell 20. The battery cell 20 is configured to be accommodated in the case 10.

The case 10 is configured to provide an assembly space for the battery cell 20, and the case 10 may be of various structures. In some embodiments, the case 10 may include a first case body 11 and a second case body 12. The first case body 11 and the second case body 12 cover each other. The first case body 11 and the second case body 12 jointly define an assembly space for accommodating the battery cell 20. The second case body 12 may be of a hollow structure with one end open, and the first case body 11 may be of a plate-shaped structure. The first case body 11 covers the open side of the second case body 12, such that the first case body 11 and the second case body 12 jointly define an assembly space; the first case body 11 and the second case body 12 may also both be of a hollow structure with one side open, and the open side of the first case body 11 covers the open side of the second case body 12.

Certainly, the case 10 formed by the first case body 11 and the second case body 12 may be in various shapes, such as a cylinder, a rectangular parallelepiped, or a cube. Illustratively, in FIG. 2, the case 10 is in the shape of a rectangular parallelepiped.

In the battery 100, one or a plurality of battery cells 20 disposed in the case 10 may be provided. If a plurality of battery cells 20 disposed in the case 10 are provided, the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may be that in the battery 100, the plurality of battery cells 20 are first connected in series, in parallel, or in series-parallel to form battery modules, and then the plurality of battery modules are connected in series, in parallel, or in series-parallel to form a whole, the whole being accommodated in the case 10.

In some embodiments, the battery 100 may further include other structures. For example, the battery 100 may further include a busbar component, and the busbar component is configured to connect the plurality of battery cells 20 to achieve an electrical connection among the plurality of battery cells 20.

Each battery cell 20 may be a secondary battery or a primary battery; it may also be a lithium-sulfur battery, a sodium-ion battery, or a magnesium-ion battery, but is not limited thereto. The battery cell 20 may be in the shape of a rectangular parallelepiped, a cylinder, a prism, or other shapes. Illustratively, in FIG. 3, the battery cell 20 is of a rectangular parallelepiped structure.

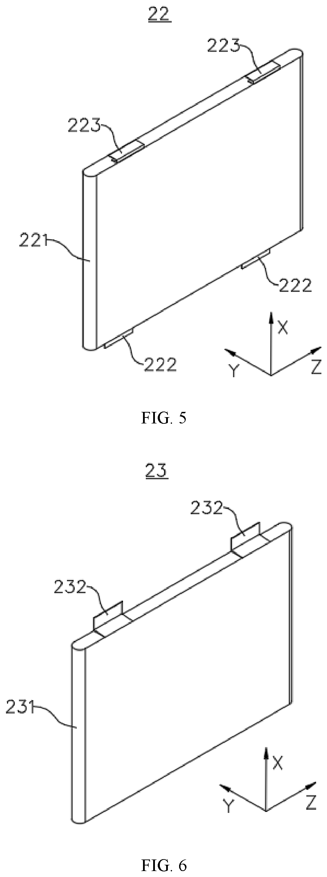

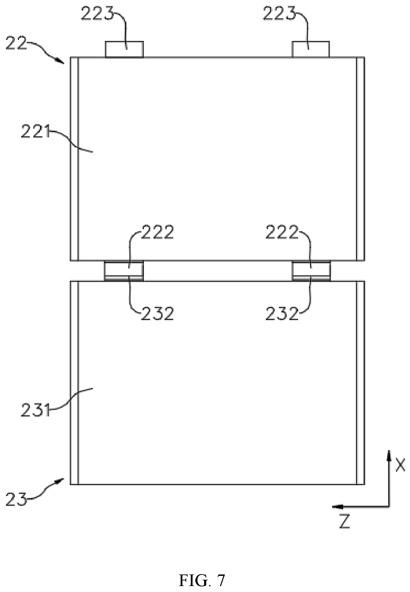

According to some embodiments of the present application, referring to FIG. 3, and further referring to FIGs. 4, 5, 6, and 7, FIG. 4 is an exploded view of a structure of a battery cell 20 according to some embodiments of the present application, FIG. 5 is a schematic structural diagram of a first electrode assembly 22 of a battery cell 20 according to some embodiments of the present application, FIG. 6 is a schematic structural diagram of a second electrode assembly 23 of a battery cell 20 according to some embodiments of the present application, and FIG. 7 is a schematic diagram of a connection between a first electrode assembly 22 and a second electrode assembly 23 according to some embodiments of the present application. The present application provides a battery cell 20, and the battery cell 20 includes a housing 21, a first electrode assembly 22, and a second electrode assembly 23. Both the first electrode assembly 22 and the second electrode assembly 23 are accommodated in the housing 21. The first electrode assembly 22 and the second electrode assembly 23 are arranged along a first direction X and are electrically connected. Both the first electrode assembly 22 and the second electrode assembly 23 are wound structures formed by winding around the axis extending in the first direction X.

The housing 21 may also be configured to accommodate an electrolyte, such as an electrolytic solution. The housing 21 may also be made of various materials, such as copper, iron, aluminum, steel, or aluminum alloy.

In some embodiments, the housing 21 may include a housing body 211 and an end cover 212; an accommodating cavity is formed inside the housing body 211, the accommodating cavity is configured to accommodate the first electrode assembly 22 and the second electrode assembly 23, and the accommodating cavity is provided with an opening 2111. That is, the housing body 211 is a hollow structure with the opening 2111 formed at one end, and the end cover 212 covers the opening 2111 of the housing body 211 and forms a sealed connection, so as to form a sealed space for accommodating the first electrode assembly 22, the second electrode assembly 23, and the electrolytic solution.

During the assembly of the battery cell 20, the first electrode assembly 22 and the second electrode assembly 23 may first be placed into the housing body 211, and the electrolytic solution is filled into the housing body 211, and then the end cover 212 is used to cover the opening 2111 of the housing body 211, so as to complete the assembly of the battery cell 20.

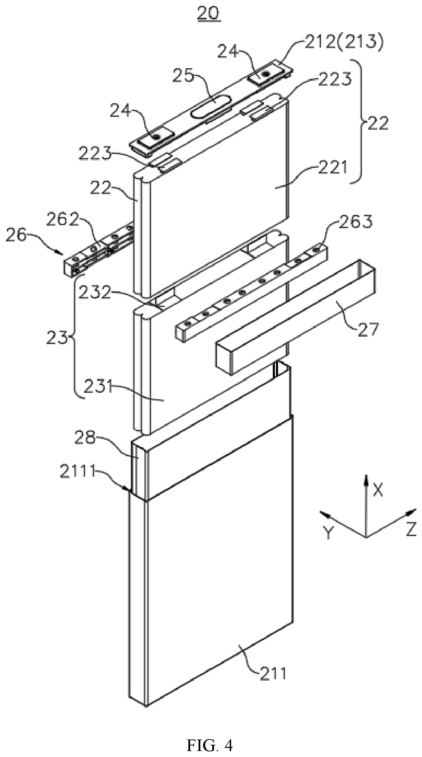

The housing body 211 may be in various shapes, such as a rectangular parallelepiped or a prismatic structure. Certainly, the structure of the end cover 212 may also be of various types. For example, the end cover 212 is of a plate-shaped structure, a hollow structure with one end open, or the like. Illustratively, in FIG. 4, the housing body 211 is of a rectangular parallelepiped structure, and the end cover 212 is of a plate-shaped structure.

Certainly, it can be understood that the housing 21 is not merely limited to the above structure, and the housing 21 may also be of other structures. For example, the housing 21 may include a housing body 211 and two end covers 212; the housing body 211 is a hollow structure with openings 2111 on opposite sides, and one end cover 212 correspondingly covers one opening 2111 of the housing body 211 and forms a sealed connection, so as to form a sealed space for accommodating the first electrode assembly 22, the second electrode assembly 23, and the electrolyte. That is, the housing body 211 is provided with openings 2111 on opposite sides, and the two end covers 212 cover the two sides of the housing body 211, respectively, so as to close the corresponding openings 2111.

The first electrode assembly 22 and the second electrode assembly 23 are components in the battery cell 20 in which electrochemical reactions occur. The structure of the first electrode assembly 22 and the structure of the second electrode assembly 23 may be of various types. For example, the first electrode assembly 22 and the second electrode assembly 23 may be cylindrical or flat.

The battery cell 20 includes the first electrode assembly 22 and the second electrode assembly 23; that is, the battery cell 20 is provided with a plurality of electrode assemblies, and at least two electrode assemblies among the plurality of electrode assemblies are the first electrode assembly 22 and the second electrode assembly 23.

The first electrode assembly 22 and the second electrode assembly 23 are both wound structures formed by winding around the axis extending in the first direction X; that is, the first electrode assembly 22 and the second electrode assembly 23 are both wound-type structures formed by winding a positive electrode plate, a separator, and a negative electrode plate, and the winding central axis of the first electrode assembly 22 and the winding central axis of the second electrode assembly 23 both extend in the first direction X. That is, the axial direction of the first electrode assembly 22 and the axial direction of the second electrode assembly 23 are both consistent with the first direction X.

Illustratively, the separator is a separation film, and the main material of the separation film may be selected from at least one of glass fiber, non-woven fabric, polyethylene, polypropylene, and polyvinylidene fluoride.

The first electrode assembly 22 and the second electrode assembly 23 are arranged along the first direction X and are electrically connected. That is, the first electrode assembly 22 and the second electrode assembly 23 are of a structure overlapping in the axial direction of the first electrode assembly 22 or the axial direction of the second electrode assembly 23, and the first electrode assembly 22 and the second electrode assembly 23 are in electrical conduction with each other. Optionally, the first electrode assembly 22 and the second electrode assembly 23 may be connected in parallel or connected in series.

Illustratively, in FIG. 4, in the first direction X, the battery cell 20 only includes one set of first electrode assemblies 22 and one set of second electrode assemblies 23 disposed in an overlapping manner. Certainly, in other embodiments, the battery cell 20 may further include a plurality of sets of first electrode assemblies 22 disposed in an overlapping manner on one side of the second electrode assembly 23 in the first direction X, and every two adjacent sets of first electrode assemblies 22 in the first direction X are electrically connected to each other.

Optionally, the first electrode assembly 22 and the second electrode assembly 23 may be of a cylindrical structure or a flat structure. It should be noted that when the first electrode assembly 22 and the second electrode assembly 23 are of the flat structure, each set of first electrode assemblies 22 and each set of second electrode assemblies 23 located at the same position in the first direction X may include one electrode assembly, or may include a plurality of electrode assemblies stacked along a thickness direction of the battery cell 20. The thickness direction of the battery cell 20 is perpendicular to the first direction X, and the thickness direction of the battery cell 20 is a second direction Y. Illustratively, in FIG. 4, the first electrode assembly 22 and the second electrode assembly 23 are both of the flat structure, and the battery cell 20 includes two first electrode assemblies 22. The two first electrode assemblies 22 are stacked along the second direction Y. Correspondingly, the battery cell 20 includes two second electrode assemblies 23, and the two second electrode assemblies 23 are stacked along the second direction Y. That is, the battery cell 20 includes one set of first electrode assemblies 22 and one set of second electrode assemblies 23 stacked along the first direction X. Each set of first electrode assemblies 22 includes two first electrode assemblies 22 stacked along the thickness direction of the battery cell 20. Correspondingly, each set of second electrode assemblies 23 includes two second electrode assemblies 23 stacked along the thickness direction of the battery cell 20.

In some embodiments, referring to FIGs. 3 and 4, the battery cell 20 may further include two electrode terminals 24. The two electrode terminals 24 are both mounted on the housing 21 in an insulated manner. The two electrode terminals 24 are both configured to be electrically connected to the first electrode assembly 22 or the second electrode assembly 23 to output or input electrical energy of the battery cell 20. The two electrode terminals 24 are configured to output or input a positive electrode and a negative electrode of the battery cell 20, respectively.

The electrode terminals 24 are mounted on the housing 21 in an insulated manner; that is, no electrical connection is formed between the electrode terminals 24 and the housing 21. The electrode terminals 24 may be disposed on the end cover 212 of the housing 21, or may be disposed on the housing body 211 of the housing 21. Illustratively, in FIGs. 3 and 4, the electrode terminals 24 are disposed on the end cover 212.

Optionally, the electrode terminals 24 serve to output or input the electrical energy of the battery cell 20; the electrode terminals 24 may be made of various materials, such as copper, iron, aluminum, steel, or aluminum alloy.

In some embodiments, referring to FIGs. 3 and 4, the battery cell 20 may further include a pressure relief mechanism 25. The pressure relief mechanism 25 is disposed on the housing 21, and the pressure relief mechanism 25 is configured to relieve the pressure inside the battery cell 20 when the internal pressure or temperature of the battery cell 20 reaches a predetermined value.

Optionally, the pressure relief mechanism 25 may be disposed on the end cover 212 of the housing 21, or may be disposed on the housing body 211 of the housing 21. Illustratively, in FIGs. 3 and 4, the pressure relief mechanism 25 is disposed on the end cover 212.

Similarly, the pressure relief mechanism 25 and the housing 21 may be of an integrally formed structure, or may be of a separately provided structure. Illustratively, in FIG. 4, the pressure relief mechanism 25 and the housing 21 are of a split-type structure. The pressure relief mechanism 25 may be connected to the housing 21 by welding or the like. Correspondingly, the pressure relief mechanism 25 may be a pressure relief component such as an anti-explosion valve, an anti-explosion sheet, a gas valve, a pressure relief valve, or a safety valve. Certainly, in other embodiments, the pressure relief mechanism 25 and the housing 21 may also be of an integrally formed structure, and the pressure relief mechanism 25 is a region of the housing 21 where a weak structure is formed, for example, a region of the housing 21 where a score groove is provided.

The housing 21 of the battery cell 20 accommodates the first electrode assembly 22 and the second electrode assembly 23 arranged along the first direction X and electrically connected to each other, and both the first electrode assembly 22 and the second electrode assembly 23 are wound-type structures formed by winding around the axis extending in the first direction X, such that the first electrode assembly 22 and the second electrode assembly 23 are structures arranged in the housing 21 along the axial directions of the first electrode assembly and the second electrode assembly. The battery cell 20 adopting such a structure is capable of optimizing the dimension in the first direction X of a single electrode assembly accommodated in the housing 21 while realizing the increase in the length dimension of the battery cell 20 in the first direction X, without the need to enlarge the winding dimension of the first electrode assembly 22 or the second electrode assembly 23 in the first direction X, thereby effectively reducing the winding difficulty of the first electrode assembly 22 and the second electrode assembly 23 and reducing the assembly difficulty of the battery cell 20. This, in turn, is conducive to reducing the manufacturing cost of the battery cell 20 and improving the production efficiency of the battery cell 20.

According to some embodiments of the present application, referring to FIGs. 5, 6, and 7, the first electrode assembly 22 includes a first main body 221 and a first tab 222, the second electrode assembly 23 includes a second main body 231 and a second tab 232, and the second main body 231 and the first main body 221 are arranged along the first direction X. Along the first direction X, the first tab 222 is disposed at an end, facing the second main body 231, of the first main body 221, and the second tab 232 is disposed at an end, facing the first main body 221, of the second main body 231. The second tab 232 is connected to the first tab 222 to electrically connect the first electrode assembly 22 and the second electrode assembly 23.

The first main body 221 of the first electrode assembly 22 is a region where the first electrode assembly 22 undergoes a chemical reaction within the battery cell 20. The first main body 221 is a structure formed by winding a region of a positive electrode plate coated with a positive electrode active substance layer, a separator, and a region of a negative electrode plate coated with a negative electrode active substance layer. The first main body works mainly by relying on the movement of metal ions between the positive electrode plate and the negative electrode plate having opposite polarities.

The first tab 222 is a positive electrode or a negative electrode configured to be electrically connected to the second tab 232 of the second electrode assembly 23. If the first tab 222 is configured to input or output a positive electrode of the first electrode assembly 22, the first tab 222 is a component formed by stacking and connecting regions of a positive electrode plate not coated with a positive electrode active substance layer. If the first tab 222 is configured to output or input a negative electrode of the first electrode assembly 22, the first tab 222 is a component formed by stacking and connecting regions of a negative electrode plate not coated with a negative electrode active substance layer. Each first electrode assembly 22 is provided with two first tabs 222, and the two first tabs 222 are both connected to an end, facing the second electrode assembly 23, of the first main body 221 in the first direction X. The two first tabs 222 have different polarities; that is, the two first tabs 222 of each first electrode assembly 22 are respectively a positive electrode and a negative electrode configured to be electrically connected to the second tabs 232 of the second electrode assembly 23.

Similarly, the second main body 231 of the second electrode assembly 23 is a region where the second electrode assembly 23 undergoes a chemical reaction within the battery cell 20. The second main body 231 is a structure formed by winding a region of a positive electrode plate coated with a positive electrode active substance layer, a separator, and a region of a negative electrode plate coated with a negative electrode active substance layer. The second main body works mainly by relying on the movement of metal ions between the positive electrode plate and the negative electrode plate having opposite polarities.

The second tab 232 is a positive electrode or a negative electrode configured to be electrically connected to the first tab 222 of the first electrode assembly 22. If the second tab 232 is configured to input or output a positive electrode of the second electrode assembly 23, the second tab 232 is a component formed by stacking and connecting regions of a positive electrode plate not coated with a positive electrode active substance layer. If the second tab 232 is configured to output or input a negative electrode of the second electrode assembly 23, the second tab 232 is a component formed by stacking and connecting regions of a negative electrode plate not coated with a negative electrode active substance layer. Each second electrode assembly 23 is provided with two second tabs 232, and the two second tabs 232 are both connected to an end, facing the first electrode assembly 22, of the second main body 231 in the first direction X. The two second tabs 232 have different polarities; that is, the two second tabs 232 of each second electrode assembly 23 are respectively a positive electrode and a negative electrode configured to be electrically connected to the first tabs 222 of the first electrode assembly 22.

It should be noted that for the two first tabs 222 of the first electrode assembly 22 and the two second tabs 232 of the second electrode assembly 23, the first tab 222 and the second tab 232 having the same polarity may be correspondingly connected, to achieve a parallel connection between the first electrode assembly 22 and the second electrode assembly 23, or the first tab 222 and the second tab 232 having opposite polarities may be correspondingly connected, to achieve a series connection between the first electrode assembly 22 and the second electrode assembly 23.

In FIGs. 4 and 7, the first electrode assembly 22 may further include a third tab 223; the third tab 223 is connected to an end, away from the first tab 222, of the first main body 221 in the first direction X, and the third tab 223 is located at an end, facing the electrode terminal 24, of the first main body 221. The third tab 223 is configured to be electrically connected to the electrode terminal 24 to output or input electrical energy of the first electrode assembly 22 and the second electrode assembly 23.

The third tab 223 is configured to output or input the positive electrode or the negative electrode of the first electrode assembly 22. If the third tab 223 is configured to input or output the positive electrode of the first electrode assembly 22, the third tab 223 is a component formed by stacking and connecting the regions of the positive electrode plate not coated with the positive electrode active substance layer. If the third tab 223 is configured to output or input the negative electrode of the first electrode assembly 22, the third tab 223 is a component formed by stacking and connecting the regions of the negative electrode plate not coated with the negative electrode active substance layer. Each first electrode assembly 22 is provided with two third tabs 223, and the two third tabs 223 are both connected to an end, facing the electrode terminal 24, of the first main body 221 in the first direction X. The two third tabs 223 have different polarities, and the two third tabs 223 are connected to two electrode terminals 24, respectively; that is, the two third tabs 223 of each first electrode assembly 22 are configured to output a positive electrode and a negative electrode of the first electrode assembly 22, respectively.

The first main body 221 of the first electrode assembly 22 and the second main body 231 of the second electrode assembly 23 are arranged along the first direction X, the first tab 222 of the first electrode assembly 22 is disposed at the end, facing the second main body 231, of the first main body 221, and correspondingly, the second tab 232 of the second electrode assembly 23 is disposed at the end, facing the first main body 221, of the second main body 231, such that connecting the first tab 222 and the second tab 232 can achieve an electrical connection between the first electrode assembly 22 and the second electrode assembly 23. The battery cell 20 adopting such a structure facilitates the connection between the first electrode assembly 22 and the second electrode assembly 23, and is conducive to reducing the difficulty of the electrical connection between the first electrode assembly 22 and the second electrode assembly 23, thereby improving the assembly efficiency of the battery cell 20.

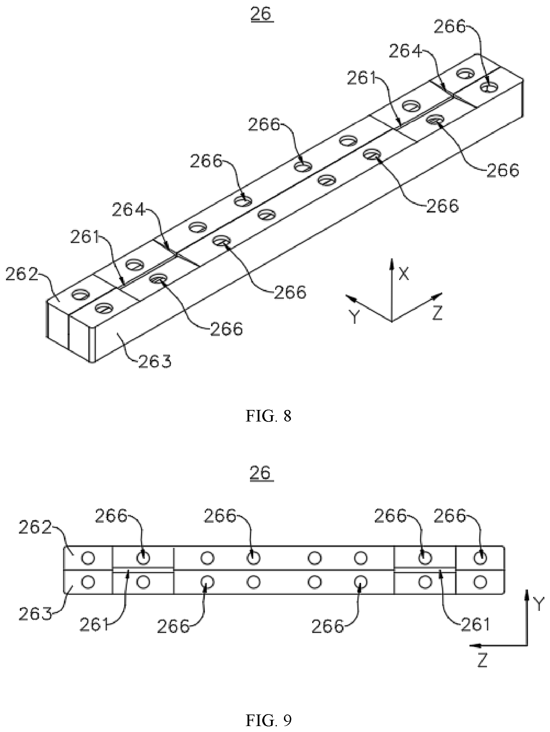

According to some embodiments of the present application, referring to FIGs. 4 and 7, and further referring to FIG. 8, FIG. 8 is a schematic structural diagram of a mounting frame 26 of a battery cell 20 according to some embodiments of the present application. The battery cell 20 may further include a mounting frame 26. The mounting frame 26 is disposed between the first main body 221 and the second main body 231 in the first direction X, and the mounting frame 26 is configured to separate the first main body 221 and the second main body 231.

The mounting frame 26 is assembled between the first main body 221 and the second main body 231, serving to separate and support the first main body 221 and the second main body 231. The mounting frame 26 may be made of various materials, such as rubber, silicone, or plastic.

Illustratively, in FIG. 4, an end, close to the second main body 231, of the first main body 221 in the first direction X abuts against the mounting frame 26, and an end, close to the first main body 221, of the second main body 231 in the first direction X abuts against the mounting frame 26.

The mounting frame 26 is disposed between the first main body 221 and the second main body 231 that are arranged along the first direction X, such that the mounting frame 26 can separate the first main body 221 and the second main body 231. On the one hand, the mounting frame 26 can serve to stably assemble the first main body 221 and the second main body 231, which is conducive to reducing the stability of the first electrode assembly 22 and the second electrode assembly 23 assembled into the housing 21. On the other hand, the collisions or contact between the first main body 221 and the second main body 231 during use can be reduced.

According to some embodiments of the present application, referring to FIGs. 7 and 8, and further referring to FIG. 9, FIG. 9 is a top view of a mounting frame 26 of a battery cell 20 according to some embodiments of the present application. The mounting frame 26 is provided with a clearance hole 261. The clearance hole 261 extends through the mounting frame 26 in the first direction X, and both the first tab 222 and the second tab 232 are inserted into the clearance hole 261.

The clearance hole 261 extends through the mounting frame 26 in the first direction X; that is, a mounting hole is a structure extending in the first direction X, and the mounting hole extends through surfaces on two sides of the mounting frame 26 in the first direction X.

Both the first tab 222 and the second tab 232 are inserted into the clearance hole 261; that is, at least a portion of the first tab 222 and at least a portion of the second tab 232 are accommodated in the clearance hole 261, such that the connection position of the first tab 222 and the second tab 232 is accommodated in the clearance hole 261. That is, the first tab 222 and the second tab 232 can be assembled and connected to each other in the clearance hole 261.

It should be noted that in other embodiments, the mounting frame 26 may not be provided with the clearance hole 261, and the first tab 222 and the second tab 232 only need to bypass the mounting frame 26 and then be connected to the outer side of the mounting frame 26.

The mounting frame 26 is provided with the clearance hole 261 that extends through the two sides of the mounting frame 26 in the first direction X, and both the first tab 222 and the second tab 232 are inserted into the clearance hole 261, such that the battery cell 20 adopting such a structure can, on the one hand, reduce the connection difficulty of the first tab 222 and the second tab 232, which is conducive to reducing the blocking of the first tab 222 and the second tab 232 by the mounting frame 26, and on the other hand, the mounting frame 26 can also play a certain stabilizing and protecting role for the first tab 222 and the second tab 232, which is conducive to reducing the wobbling or damage of the first tab 222 and the second tab 232 during use, thereby improving the use stability and service life of the battery cell 20.

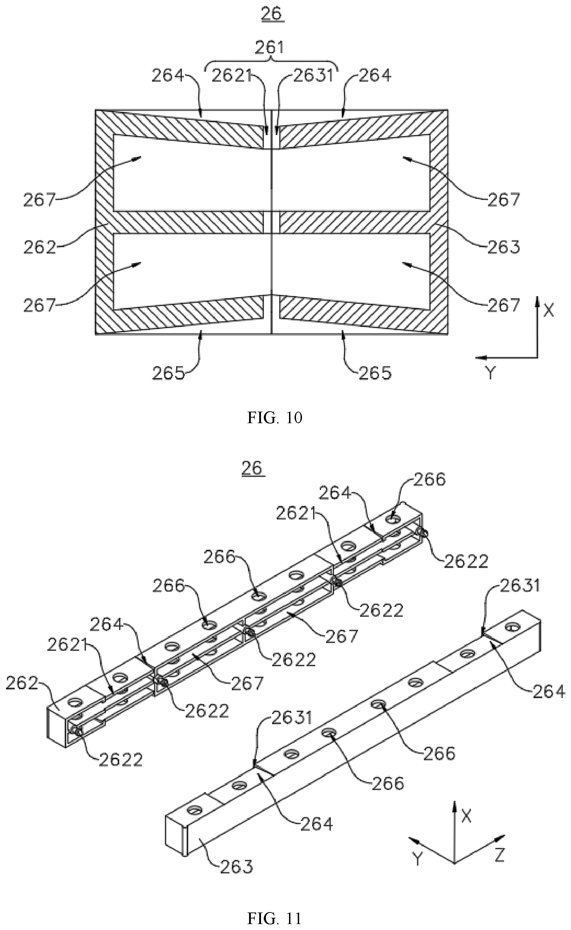

According to some embodiments of the present application, referring to FIGs. 8 and 9, and further referring to FIGs. 10 and 11, FIG. 10 is a cross-sectional view of a mounting frame 26 of a battery cell 20 according to some embodiments of the present application, and FIG. 11 is an exploded view of a structure of a mounting frame 26 of a battery cell 20 according to some embodiments of the present application. The mounting frame 26 may include a first frame body 262 and a second frame body 263 detachably connected to each other; the first frame body 262 and the second frame body 263 are arranged along a second direction Y, and the first frame body 262 and the second frame body 263 jointly define, in an enclosing manner, the clearance hole 261. The second direction Y is perpendicular to the first direction X.

The mounting frame 26 includes the first frame body 262 and the second frame body 263 detachably connected to each other; that is, the mounting frame 26 is composed of the separately provided first frame body 262 and second frame body 263 detachably connected to each other. The connecting structure between the first frame body 262 and the second frame body 263 may be of various types, for example, the first frame body 262 and the second frame body 263 may be connected to each other by means of a detachable connection, such as a snap-fit connection or a bolted connection.

The first frame body 262 and the second frame body 263 jointly define, in an enclosing manner, the clearance hole 261; that is, the clearance hole 261 is formed on a contact surface where the first frame body 262 and the second frame body 263 abut against each other, such that the clearance hole 261 is located between the first frame body 262 and the second frame body 263. That is, the first frame body 262 and the second frame body 263, after being connected to each other in the second direction Y, are jointly joined to form the clearance hole 261, thereby facilitating the accommodation of the first tab 222 and the second tab 232 in the clearance hole 261 after the first tab and the second tab are connected to each other.

The mounting frame 26 is provided with the first frame body 262 and the second frame body 263 that are arranged along the second direction Y. The first frame body 262 and the second frame body 263 are configured as a detachably connected structure, and the first frame body 262 and the second frame body 263 jointly define, in an enclosing manner, the clearance hole 261 configured to allow the first tab 222 and the second tab 232 to be inserted thereinto, such that the mounting frame 26 adopting such a structure, on the one hand, facilitates the assembly of the first tab 222 and the second tab 232 into the clearance hole 261 after the first tab 222 and the second tab 232 are connected to each other, which is conducive to reducing the difficulty of assembling the first tab 222 and the second tab 232 into the clearance hole 261, and on the other hand, facilitates the assembly of the mounting frame 26 between the first main body 221 and the second main body 231, and facilitates the maintenance of the first tab 222 and the second tab 232 after quickly disassembling and assembling the first frame body 262 and the second frame body 263 at a later stage.

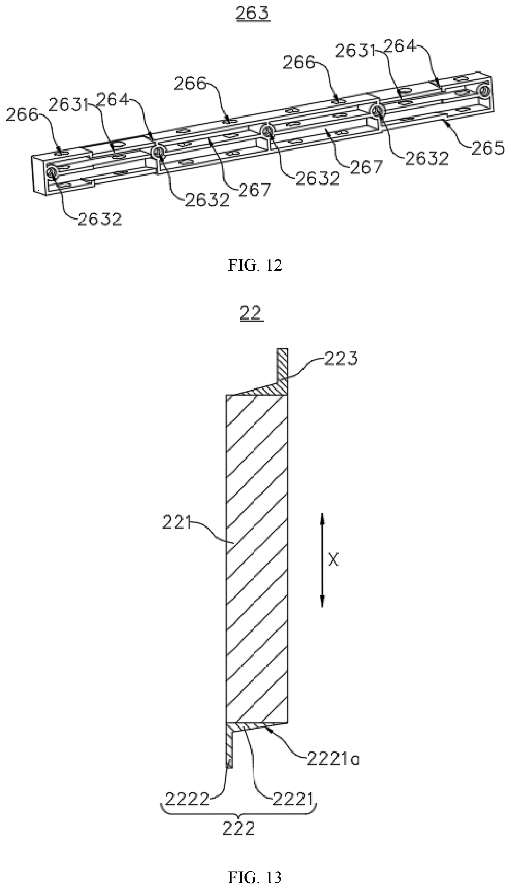

In some embodiments, referring to FIGs. 9, 10, and 11, and further referring to FIG. 12, FIG. 12 is a schematic structural diagram of a second frame body 263 of a mounting frame 26 of a battery cell 20 according to some embodiments of the present application. A first groove 2621 is provided on a side, facing the second frame body 263, of the first frame body 262, and the first groove 2621 extends through the first frame body 262 in the first direction X. A second groove 2631 is provided on a side, facing the first frame body 262, of the second frame body 263, and the second groove 2631 extends through the second frame body 263 in the first direction X. The second groove 2631 and the first groove 2621 define, in an enclosing manner, the clearance hole 261.

The first groove 2621 extends through the first frame body 262 in the first direction X; that is, two ends of the first groove 2621 in the first direction X extend to two sides of the first frame body 262 in the first direction X, respectively. Similarly, the second groove 2631 extends through the second frame body 263 in the first direction X; that is, two ends of the second groove 2631 in the first direction X extend to two sides of the second frame body 263 in the first direction X, respectively.

The second groove 2631 and the first groove 2621 define, in an enclosing manner, the clearance hole 261; that is, the first groove 2621 and the second groove are provided opposite to and facing each other in the second direction Y, such that after the first frame body 262 and the second frame body 263 are connected to each other, the first groove 2621 and the second groove 2631 define, in an enclosing manner, the clearance hole 261 extending through the two sides of the mounting frame 26 in the first direction X.

It should be noted that in other embodiments, the mounting frame 26 may also be of other structures. For example, the first groove 2621 is provided on a side, facing the second frame body 263, of the first frame body 262 in the second direction Y, the second frame body 263 is not provided with the second groove 2631, and the first groove 2621 and a surface, facing the first frame body 262, of the second frame body 263 together define, in an enclosing manner, the clearance hole 261. For another example, the second groove 2631 is provided on a side, facing the first frame body 262, of the second frame body 263 in the second direction Y, the first frame body 262 is not provided with the first groove 2621, and the second groove 2631 and a surface, facing the second frame body 263, of the first frame body 262 jointly define, in an enclosing manner, the clearance hole 261.

The first groove 2621 is provided on the side, facing the second frame body 263, of the first frame body 262, and the second groove 2631 is provided on the side, facing the first frame body 262, of the second frame body 263, such that after the first frame body 262 and the second frame body 263 are assembled with each other in the second direction Y, the first groove 2621 and the second groove 2631 can jointly define, in an enclosing manner, the clearance hole 261 configured to accommodate the first tab 222 and the second tab 232, thereby achieving a structure that is simple and easy to implement.

According to some embodiments of the present application, referring to FIGs. 11 and 12, a snap-fit part 2622 is provided on a side, facing the second frame body 263, of the first frame body 262, and a snap-fit hole 2632 is provided on a side, facing the first frame body 262, of the second frame body 263; the snap-fit hole 2632 is configured to allow the snap-fit part 2622 to be snap-fitted thereinto.

The snap-fit hole 2632 is configured to allow the snap-fit part 2622 to be snap-fitted thereinto; that is, the snap-fit part 2622 of the first frame body 262 is configured to be in snap fit with the snap-fit hole 2632 of the second frame body 263 to achieve a detachable connection between the first frame body 262 and the second frame body 263. Certainly, in other embodiments, the first frame body 262 and the second frame body 263 may also be detachably connected by means of a structure such as a screw connection screw connection.

Optionally, one or a plurality of snap-fit parts 2622 disposed on the first frame body 262 and one or a plurality of snap-fit holes 2632 disposed on the second frame body 263 may be provided. Illustratively, in the second direction Y, five snap-fit parts 2622 are provided on the side, facing the second frame body 263, of the first frame body 262, and the five snap-fit parts 2622 are spaced apart from each other along a third direction Z. The third direction Z is the length direction of the mounting frame 26, and the first direction X, the second direction Y, and the third direction Z are perpendicular to each other. Five snap-fit holes 2632 are provided on the side, facing the first frame body 262, of the second frame body 263. The snap-fit holes 2632 and the snap-fit parts 2622 are arranged in a one-to-one correspondence, and each snap-fit hole 2632 is configured to allow the snap-fit part 2622 to be snap-fitted thereinto. Certainly, in other embodiments, the number of the snap-fit parts 2622 disposed on the first frame body 262 and the number of the snap-fit holes 2632 disposed on the second frame body 263 may also be two, three, four, six, or the like.

It should be noted that in some embodiments, the snap-fit part 2622 may also be disposed on the side, facing the first frame body 262, of the second frame body 263, and correspondingly, the snap-fit hole 2632 is disposed on the side, facing the second frame body 263, of the first frame body 262.

The snap-fit part 2622 is provided on the side, facing the second frame body 263, of the first frame body 262, and correspondingly, the snap-fit hole 2632 configured to allow the snap-fit part 2622 to be snap-fitted thereinto is provided on the side, facing the first frame body 262, of the second frame body 263, such that the detachable connection between the first frame body 262 and the second frame body 263 is achieved through the snap fit between the snap-fit part 2622 and the snap-fit hole 2632. The structure is simple and easy to assemble.

According to some embodiments of the present application, referring to FIGs. 8 and 10, and further referring to FIG. 13, FIG. 13 is a cross-sectional view of a first electrode assembly 22 of a battery cell 20 according to some embodiments of the present application. The first tab 222 includes a first root part 2221 and a first tab part 2222. The first root part 2221 connects the first main body 221 and the first tab part 2222. The first tab part 2222 is inserted into the clearance hole 261, and the first tab part 2222 is connected to the second tab 232. In the first direction X, a first accommodating groove 264 is provided on a side, facing the first main body 221, of the mounting frame 26. The first accommodating groove 264 is configured to accommodate the first root part 2221, and the clearance hole 261 extends through a groove bottom surface of the first accommodating groove 264.

The first root part 2221 of the first tab 222 is a flattened region of the first tab 222, and the first tab part 2222 of the first tab 222 is a region of the first tab 222, configured to be connected to the second tab 232 or other components. The first root part 2221 is connected to an end, facing the second main body 231, of the first main body 221, and the first tab part 2222 is connected to a side, away from the first main body 221, of the first root part 2221.

The first accommodating groove 264 is provided on the side, facing the first main body 221, of the mounting frame 26; that is, the first accommodating groove 264 is provided on a surface, facing the first main body 221, of the mounting frame 26 in the first direction X, such that the first root part 2221 can be accommodated in the first accommodating groove 264 to enable the mounting frame 26 to share a portion of the space with the first root part 2221 in the first direction X, thereby helping to improve the internal space utilization rate of the battery cell 20.

The clearance hole 261 extends through the groove bottom surface of the first accommodating groove 264; that is, an end, close to the first main body 221, of the clearance hole 261 in the first direction X extends to the groove bottom surface of the first accommodating groove 264.

It should be noted that in the embodiments where the mounting frame 26 includes the first frame body 262 and the second frame body 263, referring to FIGs. 8 and 10, a portion of the first accommodating groove 264 is disposed on a surface, facing the first main body 221, of the first frame body 262, and the other portion of the first accommodating groove is disposed on a surface, facing the first main body 221, of the second frame body 263.

The first accommodating groove 264 configured to accommodate the first root part 2221 of the first tab 222 is provided on the side, facing the first main body 221, of the mounting frame 26, and the clearance hole 261 is a structure that extends through the groove bottom surface of the first accommodating groove 264, such that on the one hand, the mounting frame 26 can provide a clearance for the first root part 2221 of the first tab 222 to reduce the occurrence of the mounting frame 26 pressing against and damaging the first tab 222, and on the other hand, the insertion of the first tab part 2222 of the first tab 222 into the clearance hole 261 to assemble and connect with the second tab 232 is facilitated.

In some embodiments, referring to FIGs. 10 and 13, in the first direction X, the first root part 2221 is provided with a first surface 2221a facing away from the first main body 221, the first tab part 2222 protrudes from the first surface 2221a, and the first surface 2221a fits with the groove bottom surface of the first accommodating groove 264.

The first tab part 2222 protrudes from the first surface 2221a; that is, the first tab part 2222 is connected to the first surface 2221a of the first root part 2221 and protrudes from the first surface 2221a, enabling the first tab part 2222 to be connected to the second tab 232.

The first surface 2221a fits with the groove bottom surface of the first accommodating groove 264; that is, the first surface 2221a of the first root part 2221 can abut against a portion of the groove bottom surface of the first accommodating groove 264.

The first surface 2221a, facing the groove bottom surface of the first accommodating groove 264, of the first root part 2221 is configured as a structure that fits with the groove bottom surface of the first accommodating groove 264, enabling the groove bottom surface of the first accommodating groove 264 to fit closely to the first surface 2221a of the first root part 2221, such that the groove bottom surface of the first accommodating groove 264 can also play a certain shaping and gathering role for the first root part 2221 of the first tab 222, thereby helping to maintain the shape of the first root part 2221 of the first tab 222.

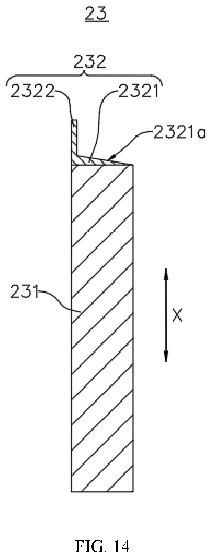

According to some embodiments of the present application, referring to FIG. 10, and further referring to FIG. 14, FIG. 14 is a cross-sectional view of a second electrode assembly 23 of a battery cell 20 according to some embodiments of the present application. The second tab 232 includes a second root part 2321 and a second tab part 2322. The second root part 2321 connects the second main body 231 and the second tab part 2322. The second tab part 2322 is inserted into the clearance hole 261, and the second tab part 2322 is connected to the first tab 222. In the first direction X, a second accommodating groove 265 is provided on a side, facing the second main body 231, of the mounting frame 26. The second accommodating groove 265 is configured to accommodate the second root part 2321, and the clearance hole 261 extends through a groove bottom surface of the second accommodating groove 265.

The second root part 2321 of the second tab 232 is a flattened region of the second tab 232, and the second tab part 2322 of the second tab 232 is a region of the second tab 232, configured to be connected to the first tab 222 or other components. The second root part 2321 is connected to an end, facing the first main body 221, of the second main body 231, and the second tab part 2322 is connected to a side, away from the second main body 231, of the second root part 2321.

The second accommodating groove 265 is provided on the side, facing the second main body 231, of the mounting frame 26; that is, the second accommodating groove 265 is provided on a surface, facing the second main body 231, of the mounting frame 26 in the first direction X, such that the second root part 2321 can be accommodated in the second accommodating groove 265 to enable the mounting frame 26 to share a portion of the space with the second root part 2321 in the first direction X, thereby helping to improve the internal space utilization rate of the battery cell 20.

The clearance hole 261 extends through the groove bottom surface of the second accommodating groove 265; that is, an end, close to the second main body 231, of the clearance hole 261 in the first direction X extends to the groove bottom surface of the second accommodating groove 265.

It should be noted that in the embodiments where the mounting frame 26 includes the first frame body 262 and the second frame body 263, referring to FIG. 10, a portion of the second accommodating groove 265 is disposed on a surface, facing the second main body 231, of the first frame body 262, and the other portion of the second accommodating groove is disposed on a surface, facing the second main body 231, of the second frame body 263.

The second accommodating groove 265 configured to accommodate the second root part 2321 of the second tab 232 is provided on the side, facing the second main body 231, of the mounting frame 26, and the clearance hole 261 is a structure that extends through the groove bottom surface of the second accommodating groove 265, such that on the one hand, the mounting frame 26 can provide a clearance for the second root part 2321 of the second tab 232 to reduce the occurrence of the mounting frame 26 pressing against and damaging the second tab 232, and on the other hand, the insertion of the second tab part 2322 of the second tab 232 into the clearance hole 261 to assemble and connect with the first tab 222 is facilitated.

In some embodiments, referring to FIGs. 10 and 14, in the first direction X, the second root part 2321 is provided with a second surface 2321a facing away from the second main body 231, the second tab part 2322 protrudes from the second surface 2321a, and the second surface 2321a fits with the groove bottom surface of the second accommodating groove 265.

The second tab part 2322 protrudes from the second surface 2321a; that is, the second tab part 2322 is connected to the second surface 2321a of the second root part 2321 and protrudes from the second surface 2321a, enabling the second tab part 2322 to be connected to the first tab 222.

The second surface 2321a fits with the groove bottom surface of the second accommodating groove 265; that is, the second surface 2321a of the second root part 2321 can abut against a portion of the groove bottom surface of the second accommodating groove 265.

The second surface 2321a, facing the groove bottom surface of the second accommodating groove 265, of the second root part 2321 is configured as a structure that fits with the groove bottom surface of the second accommodating groove 265, enabling the groove bottom surface of the second accommodating groove 265 to fit closely to the second surface 2321a of the second root part 2321, such that the groove bottom surface of the second accommodating groove 265 can also play a certain shaping and gathering role for the second root part 2321 of the second tab 232, thereby helping to maintain the shape of the second root part 2321 of the second tab 232.

According to some embodiments of the present application, referring to FIGs. 8 and 9, the mounting frame 26 is provided with a through hole 266, the through hole 266 extends through the mounting frame 26 in the first direction X, and the through hole 266 is configured to allow an electrolytic solution to pass through.

The through hole 266 extends through the mounting frame 26 in the first direction X; that is, the through hole 266 is a structure extending in the first direction X, and two ends of the through hole 266 extend through surfaces on two sides of the mounting hole in the first direction X, respectively.

The mounting frame 26 is provided with the through hole 266 that extends through the two sides of the mounting frame 26 in the first direction X, such that the electrolytic solution is allowed to flow between the first electrode assembly 22 and the second electrode assembly 23 through the through hole 266. This, on the one hand, is conducive to improving the fluidity of the electrolytic solution between the first electrode assembly 22 and the second electrode assembly 23 to improve the wetting performance of the first electrode assembly 22 and the second electrode assembly 23, and on the other hand, facilitates the flow of a gas, generated between the first electrode assembly 22 and the second electrode assembly 23, from the through hole 266.

In some embodiments, referring to FIGs. 8, 9, and 11, the mounting frame 26 is provided with a plurality of through holes 266.

Illustratively, in the embodiments where the mounting frame 26 includes the first frame body 262 and the second frame body 263, the first frame body 262 is provided with a plurality of through holes 266, and the plurality of through holes 266 are spaced apart from each other along the third direction Z. Correspondingly, the second frame body 263 is also provided with a plurality of through holes 266, and the plurality of through holes 266 are spaced apart from each other along the third direction Z. That is, in FIG. 9, the mounting frame 26 is provided with two rows of through holes 266 arranged along the second direction Y, and each row of through holes 266 includes a plurality of through holes 266 spaced apart from each other along the third direction Z. Certainly, in other embodiments, the mounting frame 26 may also be provided with one row, three rows, or four rows of through holes 266 arranged along the second direction Y, or the like.

Providing the plurality of through holes 266 on the mounting frame 26 is conducive to further improving the fluidity of the electrolytic solution between the first electrode assembly 22 and the second electrode assembly 23 to further improve the wetting performance of the first electrode assembly 22 and the second electrode assembly 23, and can further improve the flow effect of the gas generated between the first electrode assembly 22 and the second electrode assembly 23.

In some embodiments, referring to FIGs. 10 and 11, a cavity 267 is formed inside the mounting frame 26, and the cavity 267 is in communication with the through hole 266.

The cavity 267 is in communication with the through hole 266; that is, the through hole 266 is a structure extending in the first direction X, and the through hole 266 extends through a cavity wall surface of the cavity 267, such that at least a portion of a projection of the through hole 266 in the first direction X is located in the cavity 267.

It should be noted that in the embodiments where the mounting frame 26 includes the first frame body 262 and the second frame body 263, in FIGs. 10 and 11, a portion of the cavity 267 is located in the first frame body 262, and the other portion is located in the second frame body 263. That is, the cavity 267 extends through a side, facing the second frame body 263, of the first frame body 262 and a side, facing the first frame body 262, of the second frame body 263, such that the first frame body 262 and the second frame body 263 jointly define, in an enclosing manner, the cavity 267. Illustratively, two cavities 267 are formed inside the mounting frame 26, the two cavities 267 are spaced apart from each other along the first direction X, and the through hole 266 sequentially extends through the two cavities 267 in the first direction X.

The cavity 267 is provided inside the mounting frame 26, and the cavity 267 is in communication with the through hole 266; that is, the through hole 266 is of a structure extending through the inner wall surface of the cavity 267, such that the mounting frame 26 adopting such a structure, on the one hand, can reduce the weight of the mounting frame 26 by providing the cavity 267 to reduce the overall weight of the battery cell 20, thereby helping to improve the energy density of the battery cell 20, and on the other hand, enables the cavity 267 to also play a certain buffering role for the electrolytic solution, thereby helping to further improve the wetting performance of the first electrode assembly 22 and the second electrode assembly 23.

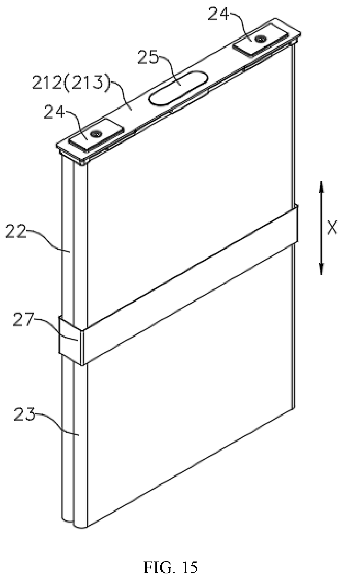

According to some embodiments of the present application, referring to FIGs. 4 and 7, and further referring to FIG. 15, FIG. 15 is a schematic diagram of an assembly of a first electrode assembly 22 and a second electrode assembly 23 with a connecting member 27 according to some embodiments of the present application. The battery cell 20 may further include a connecting member 27, and the connecting member 27 connects the mounting frame 26, the first main body 221, and the second main body 231.

The connecting member 27 is located on an outer side of the mounting frame 26, and the connecting member 27 serves to connect the mounting frame 26, the first main body 221, and the second main body 231. Optionally, the structure of the connecting member 27 connecting the mounting frame 26, the first main body 221, and the second main body 231 may be of various types, such as adhesive bonding or hot-melt connection.

The battery cell 20 is further provided with the connecting member 27 connecting the mounting frame 26, the first main body 221, and the second main body 231, such that the mounting frame 26, the first main body 221, and the second main body 231 can be connected into a whole via the connecting member 27. This is conducive to improving the structural stability of the mounting frame 26 disposed between the first main body 221 and the second main body 231, thereby reducing the risks such as wobbling or detachment of the mounting frame 26 between the first main body 221 and the second main body 231.

In some embodiments, the connecting member 27 is adhesively bonded to the mounting frame 26, the first main body 221, and the second main body 231.

Optionally, the connecting member 27 is adhesively bonded to outer sides of the mounting frame 26, the first main body 221, and the second main body 231. The connecting member 27 may be adhesive paper, adhesive tape, or the like. Certainly, the connecting member 27 may also be an insulating film provided with an adhesive layer, or the like; the adhesive layer may be glue or hot-melt adhesive, or the like, and a material of the connecting member 27 may be rubber, silicone, plastic, or the like.

The connecting member 27 is configured as a structure adhesively bonded to the mounting frame 26, the first main body 221, and the second main body 231 to connect the mounting frame 26, the first main body 221, and the second main body 231 into a whole, such that the battery cell 20 adopting such a structure is conducive to reducing the assembly difficulty of the connecting member 27 connecting the mounting frame 26, the first main body 221, and the second main body 231, thereby improving the assembly efficiency of the battery cell 20.

In some embodiments, referring to FIG. 15, the connecting member 27 surrounds the outer sides of the mounting frame 26, the first main body 221, and the second main body 231 around the axis extending in the first direction X. That is, the connecting member 27 is an annular structure extending in a circumferential direction of the mounting frame 26, such that the connecting member 27 wraps around the outer sides of the mounting frame 26, the first main body 221, and the second main body 231, and a side, facing the mounting frame 26, of the connecting member 27 is adhesively bonded to outer surfaces of the mounting frame 26, the first main body 221, and the second main body 231.

The connecting member 27 is configured as an annular structure surrounding the mounting frame 26, the first main body 221, and the second main body 231, such that the connecting member 27 wraps around the outer sides of the mounting frame 26, the first main body 221, and the second main body 231. This is conducive to further improving the structural stability of the connecting member 27 connecting the mounting frame 26, the first main body 221, and the second main body 231, thereby further improving the structural stability of the mounting frame 26 disposed between the first main body 221 and the second main body 231, so as to reduce the risks such as wobbling or detachment of the mounting frame 26 between the first main body 221 and the second main body 231.

According to some embodiments of the present application, referring to FIGs. 5, 6, and 7, the first electrode assembly 22 includes two first tabs 222. The two first tabs 222 have opposite polarities and are both disposed at an end, facing the second main body 231, of the first main body 221. The second electrode assembly 23 includes two second tabs 232. The two second tabs 232 have opposite polarities and are both disposed at the end, facing the first main body 221, of the second main body 231. The first tab 222 and the second tab 232 having the same polarity are connected.

The two first tabs 222 have opposite polarities; that is, the two first tabs 222 output or input the positive electrode and the negative electrode of the first electrode assembly 22, respectively.

Illustratively, in FIG. 7, two first tabs 222 are spaced apart from each other along the third direction Z. It should be noted that in the embodiments where the battery cell 20 is provided with the mounting frame 26, and the mounting frame 26 is provided with the clearance holes 261, as shown in FIGs. 8 and 9, the mounting hole is provided with two clearance holes 261, the two clearance holes 261 are spaced apart from each other along the third direction Z, the clearance holes 261 are arranged in a one-to-one correspondence with the first tabs 222, and each clearance hole 261 is configured to allow one first tab 222 to be inserted thereinto.

The two second tabs 232 have opposite polarities; that is, the two second tabs 232 output or input the positive electrode and the negative electrode of the second electrode assembly 23, respectively.

Illustratively, in FIG. 7, two second tabs 232 are spaced apart from each other along the third direction Z. It should be noted that in the embodiments where the battery cell 20 is provided with the mounting frame 26, and the mounting frame 26 is provided with the clearance holes 261, as shown in FIGs. 8 and 9, the mounting hole is provided with two clearance holes 261, the two clearance holes 261 are spaced apart from each other along the third direction Z, the clearance holes 261 are arranged in a one-to-one correspondence with the second tabs 232, and each clearance hole 261 is configured to allow one second tab 232 to be inserted thereinto.

The first tab 222 and the second tab 232 having the same polarity are connected; that is, the first tab 222 and the second tab 232, which both serve to output or input the positive electrode, are connected to each other, and the first tab 222 and the second tab 232, which both serve to output or input the negative electrode, are connected to each other, so as to achieve a parallel electrical connection between the first electrode assembly 22 and the second electrode assembly 23.

The two first tabs 222 of the first electrode assembly 22 having opposite polarities are both disposed at the end, facing the second main body 231, of the first main body 221, and the two second tabs 232 of the second electrode assembly 23 having opposite polarities are both disposed at the end, facing the first main body 221, of the second main body 231. The first tab 222 and the corresponding second tab 232 having the same polarity are connected to each other to achieve a parallel connection between the first electrode assembly 22 and the second electrode assembly 23, thereby achieving an electrical connection between the first electrode assembly 22 and the second electrode assembly 23. The structure is simple and easy to assemble.

In some embodiments, referring to FIGs. 3, 4, 5, and 7, the housing 21 is provided with a wall part 213, and in the first direction X, the first electrode assembly 22 is located between the wall part 213 and the second electrode assembly 23. The battery cell 20 further includes two electrode terminals 24; the two electrode terminals 24 are both mounted to the wall part 213 in an insulated manner, and the electrode terminals 24 are configured to output or input electrical energy of the battery cell 20. The first electrode assembly 22 further includes two third tabs 223; the two third tabs 223 have opposite polarities and are both disposed at an end, facing the wall part 213, of the first main body 221 in the first direction X, and the two third tabs 223 are connected to the two electrode terminals 24, respectively.

The two third tabs 223 have opposite polarities; that is, the two third tabs 223 output or input the positive electrode and the negative electrode of the first electrode assembly 22, respectively, such that the two third tabs 223 can output or input the electrical energy of the battery cell 20 after being connected to the two electrode terminals 24, respectively.

Optionally, the connecting structure between the third tab 223 and the electrode terminal 24 may be of various types. The third tab 223 and the electrode terminal 24 may be directly connected; for example, the third tab 223 and the electrode terminal 24 are connected by welding or abutting against each other. Certainly, the third tab 223 and the electrode terminal 24 may also be indirectly connected; for example, the third tab 223 and a current collecting member are welded to or abut against each other, and the resulting structure is then welded to or abut against the electrode terminal 24.

It should be noted that the wall part 213 configured for mounting the electrode terminals 24 may be an end cover 212 of the housing 21 or a wall of the housing body 211. Illustratively, in FIGs. 3 and 4, the wall part 213 is the end cover 212 of the housing 21. Certainly, in some embodiments, the wall part 213 may also be a bottom wall of the housing body 211 of the housing 21 disposed opposite to the end cover 212, or a side wall of the housing body 211 of the housing 21 connected to and adjacent to the end cover 212.

The two third tabs 223 are provided on the end, facing the wall part 213, of the first main body 221 of the first electrode assembly 22 in the first direction X, and the two third tabs 223 are correspondingly connected to the two electrode terminals 24 disposed on the wall part 213 to realize the input or output of the electrical energy of the battery cell 20, such that the battery cell 20 adopting such a structure only needs to connect the third tabs 223 to the electrode terminals 24 to realize the input or output of the electrical energy of the battery cell 20 after the first electrode assembly 22 and the second electrode assembly 23 are electrically connected to each other, without the need to provide a plurality of electrode output ends, thereby realizing the increase in the length dimension of the battery cell 20 in the first direction X while only requiring two electrode terminals 24 to realize the input or output of the electrical energy of the battery cell 20. This, in turn, can effectively reduce the assembly difficulty of the battery cell 20, help to reduce the manufacturing cost of the battery cell 20, and help to improve the production efficiency of the battery cell 20.

According to some embodiments of the present application, referring to FIGs. 3 and 4, the housing 21 may include a housing body 211 and an end cover 212. An accommodating cavity having an opening 2111 is formed inside the housing body 211, and the accommodating cavity is configured to accommodate the first electrode assembly 22 and the second electrode assembly 23; the end cover 212 closes the opening 2111, and the end cover 212 is the wall part 213.

The end cover 212 is the wall part 213; that is, the electrode terminal 24 is mounted on the end cover 212, and the third tab 223 of the first electrode assembly 22 is disposed at an end, facing the end cover 212, of the first main body 221 in the first direction X.

The wall part 213 of the housing 21 is configured as the end cover 212 of the housing 21 for closing the opening 2111 of the housing body 211, such that the battery cell 20 adopting such a structure facilitates the assembly of the electrode terminal 24 on the end cover 212, and facilitates the assembly and connection of the electrode terminal 24 with the third tab 223 of the first electrode assembly 22, thereby helping to reduce the assembly difficulty of the battery cell 20, and thus improving the production efficiency of the battery cell 20.

It should be noted that the structure of the battery cell 20 is not limited thereto; in some embodiments, the battery cell 20 may also be of other structures. For example, the housing 21 may include a housing body 211 and an end cover 212, and the housing body 211 includes a side wall and a wall part 213 that are integrally formed; the side wall is disposed around a periphery of the wall part 213; in the first direction X, one end of the side wall is connected to the wall part 213, and the other end of the side wall defines, in an enclosing manner, the opening 2111; the side wall and the wall part 213 jointly define the accommodating cavity configured to accommodate the first electrode assembly 22 and the second electrode assembly 23, and the end cover 212 closes the opening 2111. That is, the wall part 213 is a bottom wall of the housing body 211, disposed opposite to the end cover 212 in the first direction X; that is, the electrode terminal 24 is mounted on the bottom wall of the housing body 211, and the third tab 223 of the first electrode assembly 22 is disposed at an end, facing the bottom wall of the housing body 211, of the first main body 221 in the first direction X.

The housing body 211 includes the side wall and the wall part 213 that are integrally formed; that is, the housing body 211 is manufactured by adopting an integral forming process, for example, an integral forming process such as stamping, casting, or extrusion molding; that is, the side wall and the wall part 213 of the housing body 211 are of an integrated structure.

The wall part 213 of the housing 21 is configured as a wall of the housing body 211, disposed opposite to the end cover 212 in the first direction X, such that the battery cell 20 adopting such a structure can enable a region of the housing 21, where the electrode terminal 24 is mounted, to be located away from the end cover 212, and ensure that no direct connection relationship exists between the wall part 213 and the end cover 212, thereby mitigating the effect of a force, generated when components such as the electrode terminal 24 pull or twist the wall part 213, acting on the end cover 212, so as to reduce the risk of connection failure between the end cover 212 and the housing body 211. This, in turn, is conducive to reducing the risk of liquid leakage of the battery cell 20 during use.

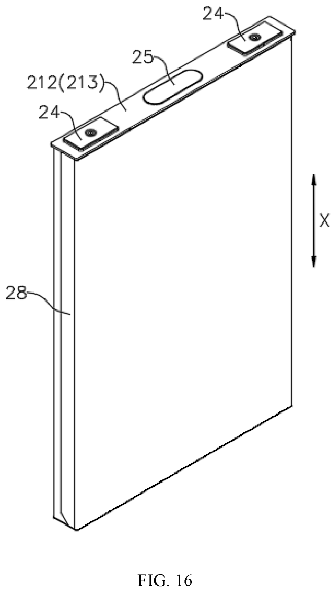

According to some embodiments of the present application, referring to FIG. 4, and further referring to FIG. 16, FIG. 16 is a schematic diagram of an assembly of a first electrode assembly 22 and a second electrode assembly 23 with an insulating member 28 according to some embodiments of the present application. The battery cell 20 may further include an insulating member 28. The insulating member 28 wraps around the outer sides of the first electrode assembly 22 and the second electrode assembly 23 about the axis extending in the first direction X. The insulating member 28 is configured to insulate and isolate the first electrode assembly 22 from the housing 21, as well as the second electrode assembly 23 from the housing 21.

The insulating member 28 wraps around the outer sides of the first electrode assembly 22 and the second electrode assembly 23 about the axis extending in the first direction X; that is, the insulating member 28 is disposed surrounding the outer sides of the first electrode assembly 22 and the second electrode assembly 23 along a circumferential direction of the first electrode assembly 22 and the second electrode assembly 23, such that both the first electrode assembly 22 and the second electrode assembly 23 are located on an inner side of the insulating member 28. This causes the insulating member 28 to be located between the housing 21 and the first electrode assembly 22, as well as between the housing 21 and the second electrode assembly 23.

Illustratively, the insulating member 28 may be made of various materials. For example, the insulating member 28 may be made of rubber, silicone, or plastic.

In some embodiments, an adhesive layer may be provided on a side, facing the first electrode assembly 22 or the second electrode assembly 23, of the insulating member 28, such that the insulating member 28 can be adhesively bonded to an outer surface of the first electrode assembly 22 or the second electrode assembly 23. The adhesive layer may be glue, double-sided adhesive tape, or the like.

The battery cell 20 is further provided with the insulating member 28, and the insulating member 28 wraps around the outer sides of the first electrode assembly 22 and the second electrode assembly 23. On the one hand, enabling the insulating member 28 to separate the first electrode assembly 22 from the housing 21 as well as the second electrode assembly 23 from the housing 21 is conducive to reducing the risk of short circuit between the first electrode assembly 22 and the housing 21 as well as between the second electrode assembly 23 and the housing 21, thereby improving the use reliability of the battery cell 20. On the other hand, the insulating member 28 can further provide a fastening effect for the first electrode assembly 22 and the second electrode assembly 23 to connect the first electrode assembly 22 and the second electrode assembly 23 arranged along the first direction X into a whole, thereby helping to improve the overall structural stability of the first electrode assembly 22 and the second electrode assembly 23.

According to some embodiments of the present application, referring to FIG. 3, a length direction of the housing 21 is consistent with the first direction X, and a length of the housing 21 is L, satisfying L ≥ 200 mm.

The first direction X is the length direction of the housing 21, and is also the height direction of the battery cell 20.

The length of the housing 21 is configured to be greater than or equal to 200 mm to increase the length dimension of the battery cell 20 in the first direction X, and the first electrode assembly 22 and the second electrode assembly 23 in the housing 21 are configured into a structure arranged along the first direction X while a relatively large length dimension of the battery cell 20 is realized, such that the dimension in the first direction X of a single electrode assembly accommodated in the housing 21 can be optimized while realizing that the length of the housing 21 of the battery cell 20 in the first direction X is greater than or equal to 200 mm, without the need to enlarge the winding dimension of the first electrode assembly 22 or the second electrode assembly 23 in the first direction X, thereby reducing the winding difficulty of the first electrode assembly 22 and the second electrode assembly 23 and reducing the assembly difficulty of the battery cell 20. This, in turn, is conducive to reducing the manufacturing cost of the battery cell 20 and improving the production efficiency of the battery cell 20.

In some embodiments, with further reference to FIG. 3, the length direction of the housing 21 is consistent with the first direction X, and the length of the housing 21 is L, satisfying L ≥ 250 mm.

The length of the housing 21 is further configured to be greater than or equal to 250 mm to further increase the length dimension of the battery cell 20 in the first direction X, such that the dimension in the first direction X of a single electrode assembly accommodated in the housing 21 can be optimized while realizing that the length of the housing 21 of the battery cell 20 in the first direction X is greater than or equal to 250 mm, without the need to enlarge the winding dimension of the first electrode assembly 22 or the second electrode assembly 23 in the first direction X, thereby reducing the winding difficulty of the first electrode assembly 22 and the second electrode assembly 23 and reducing the assembly difficulty of the battery cell 20. This, in turn, is conducive to reducing the manufacturing cost of the battery cell 20 and improving the production efficiency of the battery cell 20.

According to some embodiments of the present application, the present application further provides a battery 100. The battery 100 includes the battery cell 20 according to any one of the above solutions.

Referring to FIG. 2, the battery 100 may further include a case 10, and the battery cells 20 are accommodated in the case 10.

In some embodiments, the case 10 may include a first case body 11 and a second case body 12. The first case body 11 and the second case body 12 cover each other. The first case body 11 and the second case body 12 jointly define an assembly space for accommodating the battery cell 20.

Optionally, the second case body 12 may be of a hollow structure with one end open, and the first case body 11 may be of a plate-shaped structure. The first case body 11 covers the open side of the second case body 12, such that the first case body 11 and the second case body 12 jointly define an assembly space; the first case body 11 and the second case body 12 may also both be of a hollow structure with one side open, and the open side of the first case body 11 covers the open side of the second case body 12.

Certainly, the case 10 formed by the first case body 11 and the second case body 12 may be in various shapes, such as a cylinder or a rectangular parallelepiped. Illustratively, in FIG. 2, the case 10 is of a rectangular parallelepiped structure.

Optionally, one or a plurality of battery cells 20 disposed in the case 10 may be provided. Illustratively, in FIG. 2, a plurality of battery cells 20 are provided in the case 10 of the battery 100, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may also be that in the battery 100, the plurality of battery cells 20 are first connected in series, in parallel, or in series-parallel to form battery modules, and then the plurality of battery modules are connected in series, in parallel, or in series-parallel to form a whole and accommodated in the case 10.

The battery 100 may further include other structures. For example, the battery 100 may further include a busbar component, and the busbar component connects the plurality of battery cells 20 to achieve an electrical connection among the plurality of battery cells 20.

It should be noted that in some embodiments, the battery 100 may not be provided with the case 10; the battery 100 includes a plurality of battery cells 20, and the battery 100 composed of the plurality of battery cells 20 may be directly assembled to an electric device to provide electrical energy for the electric device via the plurality of battery cells 20. That is, the case 10 may serve as a portion of the electric device. Taking a vehicle 1000 as an example of the electric device, the case 10 may serve as a portion of the chassis structure of the vehicle 1000. For example, a portion of the case 10 may become at least a portion of the floor of the vehicle 1000, or a portion of the case 10 may become at least a portion of the crossbeam and the longitudinal beam of the vehicle 1000.

According to some embodiments of the present application, the present application further provides an electric device. The electric device includes the battery cell 20 according to any one of the above solutions, and the battery cell 20 is configured to provide electrical energy for the electric device.

The electric device may be any one of the aforementioned devices or systems that use the battery cell 20.

According to some embodiments of the present application, referring to FIGs. 3 to 16, the present application provides a battery cell 20. The battery cell 20 includes a housing 21, two electrode terminals 24, a first electrode assembly 22, a second electrode assembly 23, a mounting frame 26, a connecting member 27, and an insulating member 28. The housing 21 is provided with a wall part 213. The thickness direction of the wall part 213 is a first direction X. The length direction of the housing 21 is consistent with the first direction X. The length of the housing 21 is L, satisfying L ≥ 250 mm. The housing 21 includes a housing body 211 and an end cover 212. An accommodating cavity having an opening 2111 is formed inside the housing body 211; the end cover 212 closes the opening 2111, and the end cover 212 is the wall part 213. The two electrode terminals 24 are both mounted to the wall part 213 in an insulated manner, and the two electrode terminals 24 are configured to output or input electrical energy of the battery cell 20. Both the first electrode assembly 22 and the second electrode assembly 23 are accommodated in the accommodating cavity. The first electrode assembly 22 and the second electrode assembly 23 are arranged along the first direction X and are electrically connected. The first electrode assembly 22 is located between the wall part 213 and the second electrode assembly 23. Both the first electrode assembly 22 and the second electrode assembly 23 are wound structures formed by winding around an axis extending in the first direction X. The first electrode assembly 22 includes a first main body 221, two first tabs 222, and two third tabs 223. The second electrode assembly 23 includes a second main body 231 and two second tabs 232. The second main body 231 and the first main body 221 are arranged along the first direction X. In the first direction X, the two first tabs 222 have opposite polarities and are both disposed at an end, facing the second main body 231, of the first main body 221; the two third tabs 223 have opposite polarities and are both disposed at an end, facing the wall part 213, of the first main body 221; the two second tabs 232 have opposite polarities and are both disposed at an end, facing the first main body 221, of the second main body 231. The first tab 222 and the second tab 232, having the same polarity, are connected to electrically connect the first electrode assembly 22 and the second electrode assembly 23. The two third tabs 223 are connected to the two electrode terminals 24, respectively. The mounting frame 26 is disposed between the first main body 221 and the second main body 231 in the first direction X, and the mounting frame 26 is configured to separate the first main body 221 and the second main body 231. The mounting frame 26 is provided with a clearance hole 261. The clearance hole 261 extends through the mounting frame 26 in the first direction X, and both the first tab 222 and the second tab 232 are inserted into the clearance hole 261. The mounting frame 26 includes a first frame body 262 and a second frame body 263 detachably connected to each other; the first frame body 262 and the second frame body 263 are arranged along a second direction Y, and the first frame body 262 and the second frame body 263 jointly define, in an enclosing manner, the clearance hole 261. The second direction Y is perpendicular to the first direction X. A first groove 2621 is provided on a side, facing the second frame body 263, of the first frame body 262, and the first groove 2621 extends through the first frame body 262 in the first direction X. A second groove 2631 is provided on a side, facing the first frame body 262, of the second frame body 263, and the second groove 2631 extends through the second frame body 263 in the first direction X. The second groove 2631 and the first groove 2621 define, in an enclosing manner, the clearance hole 261. A snap-fit part 2622 is provided on a side, facing the second frame body 263, of the first frame body 262, and a snap-fit hole 2632 is provided on a side, facing the first frame body 262, of the second frame body 263; the snap-fit hole 2632 is configured to allow the snap-fit part 2622 to be snap-fitted thereinto. The first tab 222 includes a first root part 2221 and a first tab part 2222. The first root part 2221 connects the first main body 221 and the first tab part 2222. The first tab part 2222 is inserted into the clearance hole 261, and the first tab part 2222 is connected to the second tab 232. In the first direction X, a first accommodating groove 264 is provided on a side, facing the first main body 221, of the mounting frame 26. The first accommodating groove 264 is configured to accommodate the first root part 2221, and the clearance hole 261 extends through a groove bottom surface of the first accommodating groove 264. The first root part 2221 is provided with a first surface 2221a facing away from the first main body 221, the first tab part 2222 protrudes from the first surface 2221a, and the first surface 2221a fits with the groove bottom surface of the first accommodating groove 264. The second tab 232 includes a second root part 2321 and a second tab part 2322. The second root part 2321 connects the second main body 231 and the second tab part 2322. The second tab part 2322 is inserted into the clearance hole 261, and the second tab part 2322 is connected to the first tab 222. In the first direction X, a second accommodating groove 265 is provided on a side, facing the second main body 231, of the mounting frame 26. The second accommodating groove 265 is configured to accommodate the second root part 2321, and the clearance hole 261 extends through a groove bottom surface of the second accommodating groove 265. The second root part 2321 is provided with a second surface 2321a facing away from the second main body 231, the second tab part 2322 protrudes from the second surface 2321a, and the second surface 2321a fits with the groove bottom surface of the second accommodating groove 265. The mounting frame 26 is provided with a plurality of through holes 266, each through hole 266 extends through the mounting frame 26 in the first direction X, and the through hole 266 is configured to allow an electrolytic solution to pass through. A cavity 267 is formed inside the mounting frame 26, and the cavity 267 is in communication with the through hole 266. The connecting member 27 surrounds the outer sides of the mounting frame 26, the first main body 221, and the second main body 231 around the axis extending in the first direction X, and the connecting member 27 is adhesively bonded to the mounting frame 26, the first main body 221, and the second main body 231. The insulating member 28 wraps around the outer sides of the first electrode assembly 22 and the second electrode assembly 23 about the axis extending in the first direction X. The insulating member 28 is configured to insulate and isolate the first electrode assembly 22 from the housing 21, as well as the second electrode assembly 23 from the housing 21.

It should be noted that in the absence of conflicts, the embodiments and features in the embodiments in the present application may be combined with each other.

The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A battery cell, comprising:
a housing; and
a first electrode assembly and a second electrode assembly, both accommodated in the housing, wherein the first electrode assembly and the second electrode assembly are arranged along a first direction and are electrically connected, and both the first electrode assembly and the second electrode assembly are wound structures formed by winding around an axis extending in the first direction.

2. The battery cell according to claim 1, wherein the first electrode assembly comprises a first main body and a first tab, the second electrode assembly comprises a second main body and a second tab, and the second main body and the first main body are arranged along the first direction;
wherein in the first direction, the first tab is disposed at an end, facing the second main body, of the first main body, the second tab is disposed at an end, facing the first main body, of the second main body, and the second tab is connected to the first tab to electrically connect the first electrode assembly and the second electrode assembly.

3. The battery cell according to claim 2, wherein the battery cell further comprises:
a mounting frame, disposed between the first main body and the second main body in the first direction, wherein the mounting frame is configured to separate the first main body and the second main body.

4. The battery cell according to claim 3, wherein the mounting frame is provided with a clearance hole, the clearance hole extends through the mounting frame in the first direction, and both the first tab and the second tab are inserted into the clearance hole.

5. The battery cell according to claim 4, wherein the mounting frame comprises a first frame body and a second frame body detachably connected to each other; the first frame body and the second frame body are arranged along a second direction, and the first frame body and the second frame body jointly define, in an enclosing manner, the clearance hole, the second direction being perpendicular to the first direction.

6. The battery cell according to claim 5, wherein a first groove is provided on a side, facing the second frame body, of the first frame body, and the first groove extends through the first frame body in the first direction; a second groove is provided on a side, facing the first frame body, of the second frame body, and the second groove extends through the second frame body in the first direction; the second groove and the first groove define, in an enclosing manner, the clearance hole.

7. The battery cell according to claim 5 or 6, wherein a snap-fit part is provided on a side, facing the second frame body, of the first frame body, a snap-fit hole is provided on a side, facing the first frame body, of the second frame body, and the snap-fit hole is configured to allow the snap-fit part to be snap-fitted thereinto.

8. The battery cell according to any one of claims 4 to 7, wherein the first tab comprises a first root part and a first tab part; the first root part connects the first main body and the first tab part, the first tab part is inserted into the clearance hole, and the first tab part is connected to the second tab;
wherein in the first direction, a first accommodating groove is provided on a side, facing the first main body, of the mounting frame; the first accommodating groove is configured to accommodate the first root part, and the clearance hole extends through a groove bottom surface of the first accommodating groove.

9. The battery cell according to claim 8, wherein in the first direction, the first root part is provided with a first surface facing away from the first main body, the first tab part protrudes from the first surface, and the first surface fits with the groove bottom surface of the first accommodating groove.

10. The battery cell according to any one of claims 4 to 9, wherein the second tab comprises a second root part and a second tab part; the second root part connects the second main body and the second tab part, the second tab part is inserted into the clearance hole, and the second tab part is connected to the first tab;
wherein in the first direction, a second accommodating groove is provided on a side, facing the second main body, of the mounting frame; the second accommodating groove is configured to accommodate the second root part, and the clearance hole extends through a groove bottom surface of the second accommodating groove.

11. The battery cell according to claim 10, wherein in the first direction, the second root part is provided with a second surface facing away from the second main body, the second tab part protrudes from the second surface, and the second surface fits with the groove bottom surface of the second accommodating groove.

12. The battery cell according to any one of claims 3 to 11, wherein the mounting frame is provided with a through hole, the through hole extends through the mounting frame in the first direction, and the through hole is configured to allow an electrolytic solution to pass through.

13. The battery cell according to claim 12, wherein a plurality of the through holes are provided on the mounting frame.

14. The battery cell according to claim 12 or 13, wherein a cavity is formed inside the mounting frame, and the cavity is in communication with the through hole.

15. The battery cell according to any one of claims 3 to 14, wherein the battery cell further comprises:
a connecting member, connecting the mounting frame, the first main body, and the second main body.

16. The battery cell according to claim 15, wherein the connecting member is adhesively bonded to the mounting frame, the first main body, and the second main body.

17. The battery cell according to claim 15 or 16, wherein the connecting member surrounds outer sides of the mounting frame, the first main body, and the second main body around the axis extending in the first direction.

18. The battery cell according to any one of claims 2 to 17, wherein the first electrode assembly comprises two first tabs, and the two first tabs have opposite polarities and are both disposed at the end, facing the second main body, of the first main body;
the second electrode assembly comprises two second tabs, and the two second tabs have opposite polarities and are both disposed at the end, facing the first main body, of the second main body;
wherein the first tab and the second tab having a same polarity are connected.

19. The battery cell according to claim 18, wherein the housing is provided with a wall part, and in the first direction, the first electrode assembly is located between the wall part and the second electrode assembly;
the battery cell further comprises two electrode terminals; the two electrode terminals are both mounted to the wall part in an insulated manner, and the electrode terminals are configured to output or input electrical energy of the battery cell;
wherein the first electrode assembly further comprises two third tabs, the two third tabs have opposite polarities and are both disposed at an end, facing the wall part, of the first main body in the first direction, and the two third tabs are connected to the two electrode terminals, respectively.

20. The battery cell according to claim 19, wherein the housing comprises:
a housing body, wherein an accommodating cavity having an opening is formed inside the housing body, and the accommodating cavity is configured to accommodate the first electrode assembly and the second electrode assembly; and
an end cover, closing the opening;
wherein the end cover is the wall part.

21. The battery cell according to claim 19, wherein the housing comprises:
a housing body, comprising a side wall and the wall part that are integrally formed, wherein the side wall is disposed around a periphery of the wall part; in the first direction, one end of the side wall is connected to the wall part, and the other end of the side wall defines, in an enclosing manner, an opening; the side wall and the wall part jointly define an accommodating cavity configured to accommodate the first electrode assembly and the second electrode assembly; and
an end cover, closing the opening.

22. The battery cell according to any one of claims 1 to 21, wherein the battery cell further comprises:
an insulating member, wrapping around outer sides of the first electrode assembly and the second electrode assembly around the axis extending in the first direction, wherein the insulating member is configured to insulate and isolate the first electrode assembly from the housing, as well as the second electrode assembly from the housing.

23. The battery cell according to any one of claims 1 to 22, wherein a length direction of the housing is consistent with the first direction, and a length of the housing is L, satisfying L ≥ 200 mm.

24. The battery cell according to claim 23, wherein L ≥ 250 mm.

25. A battery, comprising the battery cell according to any one of claims 1 to 24.

26. An electric device, comprising the battery cell according to any one of claims 1 to 24, wherein the battery cell is configured to provide electrical energy.
